# EUROPEAN PATENT SPECIFICATION

(11) **EP 1 582 328 B1**
(45) Date of publication and mention of the grant of the patent: **02.04.2014**
(21) Application number: 03811113.4
(22) Date of filing: 11.11.2003
(51) Int. Cl.: B29C 44/08, B29C 33/10, B29C 44/10, B29C 44/34, B29C 44/56, B29C 44/58, B29C 44/60

(54) **METHOD AND APPARATUS FOR FOAM MOLDING**
VERFAHREN UND VORRICHTUNG ZUM SCHAUMSTOFF-FORMEN
PROCEDE ET DISPOSITIF DE MOULAGE DE PRODUIT GONFLANT

(30) Priority: 11.11.2002 JP 2002326419; 03.12.2002 JP 2002351423
(43) Date of publication of application: 05.10.2005
(60) Divisional application: 12153343.4
(73) Proprietor: SUNSTAR GIKEN KABUSHIKI KAISHA, Takatsuki-shi, Osaka 569-0806 (JP); Sunstar Suisse SA, 1163 Etoy (CH)
(72) Inventor: TANAKA, Satoshi, Takatsuki-shi, Osaka 569-0806 (JP); TAKADA, Masaharu, Takatsuki-shi, Osaka 569-0806 (JP); JOYASHIKI, Hisashi, Takatsuki-shi, Osaka 569-1195 (JP)
(74) Representative: Jenkins, Peter David
(86) International application number: PCT/JP2003/014315
(87) International publication number: WO 2004/043665

(56) References cited:
- WO-A1-01/47694
- WO-A1-02/053347
- DE-A1- 19 938 140
- GB-A- 1 526 316
- GB-A- 2 359 270
- JP-A- 1 145 133
- JP-A- 5 245 856
- JP-A- 11 128 709
- JP-A- 11 226 973
- JP-A- 53 009 864
- JP-A- 55 017 519
- JP-A- 61 235 111
- JP-A- 62 122 715
- JP-A- 2000 238 053
- JP-A- 2002 192 535
- JP-A- 2003 200 442
- JP-U- 56 149 624
- US-A- 4 765 935
- US-A- 5 834 527
- US-A- 5 958 991

## Description

### TECHNICAL FIELD

The present invention relates to a foam molding method and to an apparatus used therefor. Specifically, the present invention relates to a method for molding a foamable material into a predetermined shape, in which the foamable material is injected into a mold and foamed therein, to thereby fill a cavity of the mold with the foamed material. The present invention also relates to an apparatus used for carrying out the method.

### TECHNICAL BACKGROUND

In a conventional technique of this type, it has been desired to obtain a shaped foam having a number of cells formed therein, by mechanically mixing a material with a gas, to thereby form a foamable material, and injecting the foamable material into a mold, followed by removal of the mold. When such a gas-containing foamable material is injected into a mold, the gas is released into an atmosphere (normally set to atmospheric pressure) in the mold cavity. Therefore, the gas expands in the foamable material almost at the instant of injection of the material into the mold, and consequently a number of substantially spherically closed cells are formed in the material.

The thus obtained foamable material containing the spherically expanded closed cells flows along an inner wall surface of the mold to fill every part of the mold cavity. However, during flow of this foamable material, spherical cells may be deformed, or may become enlarged due to continuation between cells.

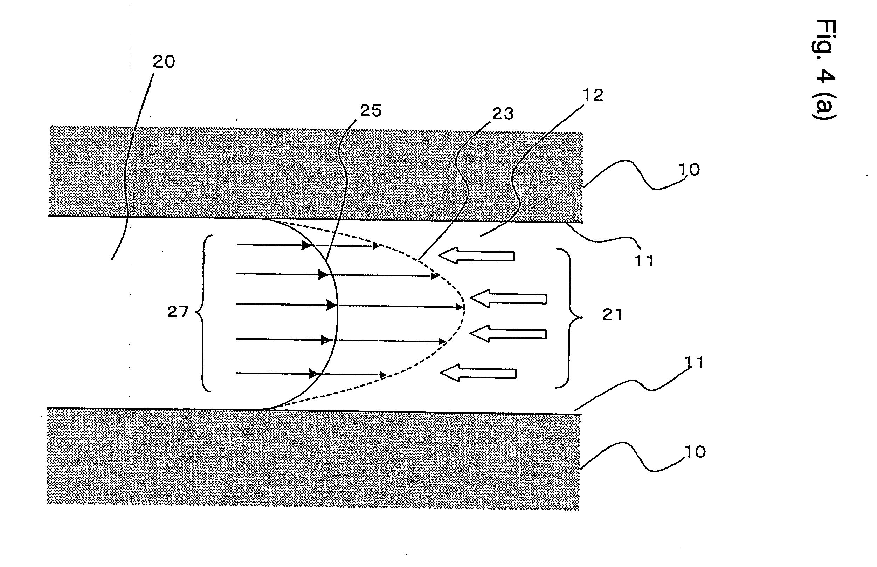

During flow of the foamable material containing the spherically expanded closed cells, due to viscosity of the fluid itself, a flow velocity and behavior of the foamable material vary, depending on a region where the material flows in the mold cavity. Specifically, as compared to a region of contact with an inner wall surface (the region adjacent to the inner wall surface), a flow velocity of the material in the region remote from the inner wall surface (such as a central region of a mold or a tube) becomes high. Due to this difference in behavior, deformation of or communication between the spherically closed cells is liable to occur in a region remote from the inner wall surface (see Fig. 4a).

Especially, when the foamable material cannot be injected instantaneously from one end, i.e., an injection opening, to an opposite end of the mold, closed cells having different sizes or shapes are likely to be formed, or cells may be exposed to a surface of the material. This results in a poor surface appearance and low initial properties of a shaped foam, and durability of the foam may also be low due to a high degree of compressive permanent deformation.

As a countermeasure, an attempt has been made to mechanically mix a material with a gas, thus obtaining a foamable material, and to inject the foamable material into a mold while sequentially shifting an injection nozzle in a direction away from an end of the mold to which the material is injected. In this method, the foamable material containing cells does not flow. Therefore, deformation of or continuation between closed cells in the material does not occur. However, when use is made of a large or elongated mold or a mold having a complex shape, it is difficult to shift an injection nozzle, so that the above method cannot be readily conducted. Further, when an injection nozzle is to be shifted, it is difficult to conduct an automatic or continuous operation for molding a foamable material.

GB2359270 describes a method and apparatus for producing formed portions from a foamable plastics melt, the plastics melt being filled into a pressurized forming cavity, the pressure being reduced after filling has taken place so that the plastics melt foams. After the plastics melt has cooled, the formed portion is removed from the mold. The gas pressure in the cavity is kept constant during the filling of the cavity.

WO01/47694 describes the manufacture of molded polyurethane products using gas assisted injection molding of foam material. The Example describes the foaming of thermoplastic polyurethane using a chemical blowing agent and a high-pressure process with gas counter-pressure. A cavity of a mold is sealed to maintain a constant counter-pressure when the mold is closed. The counter-pressure is built up as soon as the mold is closed and injection of a polymer/gas melt is started after the counter-pressure is set in the cavity. According to the present invention, when a foamable material is injected into a mold, there is no difference in flow of foamable material containing closed cells between the region in the vicinity of an inner wall surface (surface of contact) of the mold and the region remote from the surface of contact, to thereby prevent deformation of the closed cells.

US2004/108612 describes a method for foam-injection molding a thermoplastic resin. Foamable resin in a molten form is injected into a mold cavity, pressure is applied to the foamable molten resin in the cavity to press the surface of the resin against an inner wall of the cavity to allow a surface portion of the foamable resin to be solidified to form a surface skin layer, and then a portion of the foamable resin is released to lower the pressure exerted on the foamable resin, so that foaming of the resin in the cavity is caused to occur.

### DISCLOSURE OF THE INVENTION

The present invention provides a foam molding method for foaming a foamable material, the method being as defined in Claim 1.

In the present invention, a cavity of the mold to which the foamable material is injected is placed under a pressurized condition, so that a flow of the foamable material in a region remote from an inner wall surface of the mold is suppressed, to thereby avoid problems such as cell deformation and cell continuation in this region, thus achieving uniform foaming. If desired, the method of the present invention may comprise a step of heating the cavity before or after the step of releasing the pressurized condition.

In the present invention, "pressurized condition" means a pressurized condition such that foaming of the foamable material (an expansion ratio, a size of the cells, etc.) can be appropriately controlled. A degree of pressurization is appropriately determined, depending on the properties of the foamable material, such as viscosity and flow characteristics, or the strength or the intended use of the foamable material. "Foamable material" in the present invention means a material that has been prepared so that it will foam when injected into the mold, and that has appropriate consistency. In the present invention, a material to be mixed with a gas to obtain a foamable material is called "a material to be foamed", and a product obtained by foaming and shaping the foamable material is called "a shaped foam".

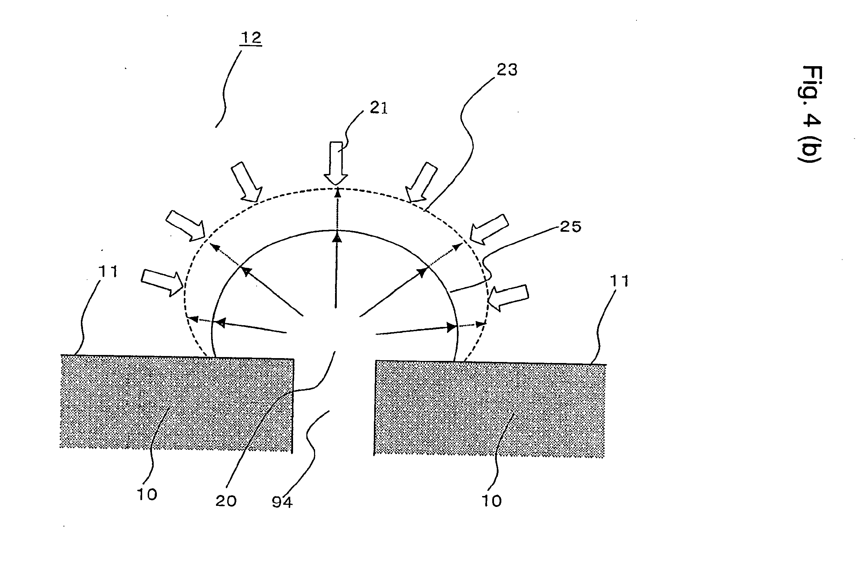

A working effect of the present invention is explained, referring to Fig. 4. Fig. 4(a) is a cross-sectional view of a mold having a cylindrical cavity. A mold 10 having an inner wall surface 11 is indicated by an upper member and a lower member shown in Fig. 4(a). A dotted line 23 and a solid line 25, both of which extend in a left-to-right direction between the inner wall surfaces 11, indicate a forward end of a foamable material 20 during flow. The dotted line 23 indicates a flow condition of the foamable material 20 when it is not under the pressurized condition. The solid line 25 indicates a flow condition of the foamable material 20 under the pressurized condition. Arrows 27 indicate flow velocities of different portions of the foamable material. In Fig. 4(a), arrows 21 pointing from right to left indicate directions of forces acting on the foamable material 20 due to the action of a gas in a mold cavity 12 (a pressure of the gas).

As indicated by the dotted line 23 and the arrows 27, the flow velocity of the foamable material in the vicinities of the inner wall surfaces 11 is low, while the flow velocity in the vicinity of a central region in the cavity is high. Due to this difference in flow velocity, when the foamable material is not placed under the pressurized condition, closed cells in the material are subject to deformation or cell continuation. On the other hand, under the pressurized condition, as indicated by the solid line 25, the flow velocity of the foamable material 20 is reduced across the entire region between the inner wall surfaces 11, due to the action of a pressure 21. A rate of reduction increases towards the central region where the foamable material 20 has a high flow velocity. Thus, by markedly reducing the flow velocity of the foamable material in the vicinity of the central region, a flow condition of the foamable material under the pressurized condition (indicated by the solid line 25) is made uniform with only a small variation in flow velocity, as compared to that when the material is not under the pressurized condition (indicated by the dotted line 23). Consequently, it is possible to avoid cell deformation or continuation.

Fig. 4(b) is a cross-sectional view of a mold in an embodiment in which a foamable material is injected for diffusion in a mold cavity. In Fig. 4(b), the foamable material 20 is injected from an injection opening 94 into the cavity 12, and diffused radially from the injection opening 94. In the case of Fig. 4(b) also, under the pressurized condition, as indicated by the dotted line 23 and the solid line 25, the pressure 21 acts to moderate diffusion of the foamable material 20. Therefore, a difference in flow velocity between a region in the vicinities of the inner wall surfaces 11 and the remaining region in the cavity becomes small, thus achieving a uniform flow of the foamable material.

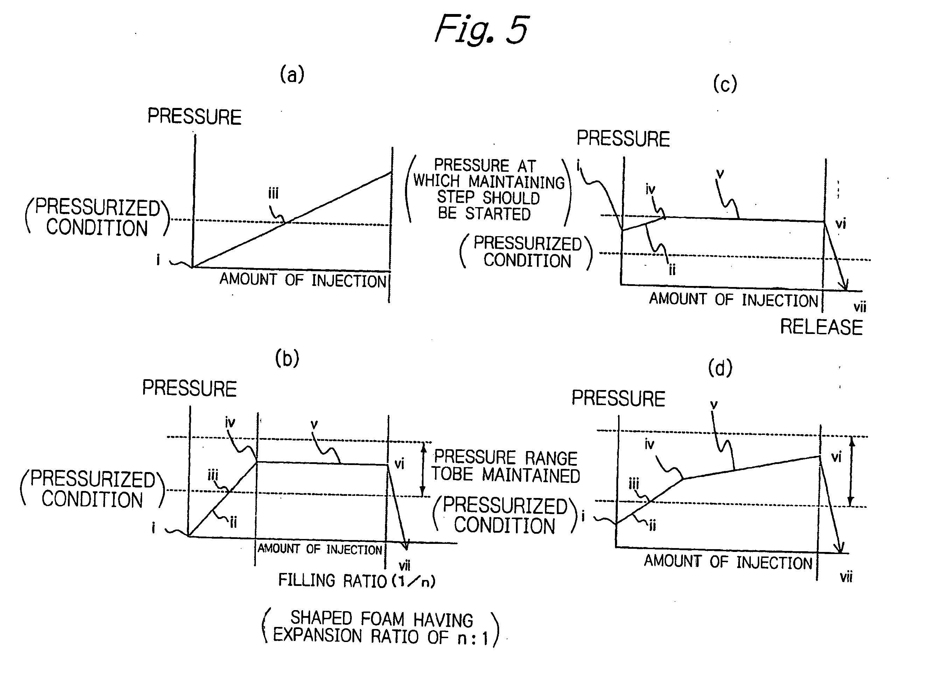

For placing the mold cavity under the pressurized condition, various embodiments are possible. In the above-mentioned foam molding method, the step of placing the cavity of the mold under the pressurized condition includes the step of injecting the foamable material after the step of hermetically closing the cavity of the mold. The foamable material is injected into the hermetically closed cavity and foamed therein, thus filling the mold cavity with the foamed material, to thereby place the mold cavity under the pressurized condition. Fig. 5 shows the relationship between the amount of injection of the foamable material and the pressure in the mold cavity. In Fig. 5, the abscissa indicates the amount of injection and the ordinate indicates the pressure in the mold cavity. In pressurizing the mold cavity by injection of the foamable material, as indicated in Figs. 5(a) and 5(b), the mold cavity is not under the pressurized condition immediately after the mold cavity is hermetically closed and injected with the foamable material [(i) in Figs. 5 (a) and 5(b)]. The pressure in the mold cavity increases as the foamable material is injected [(ii) in Figs. 5(a) and 5(b)], and the pressurized condition is obtained at the time that the material in an appropriate amount is injected into the mold cavity [(iii) in Figs. 5 (a) and 5(b)]. In this embodiment, the pressurized condition can be achieved by utilizing an apparatus for injecting the foamable material.

Therefore, there is no need to use a special apparatus as a pressurizing means.

In the present invention, the pressure to be attained under the pressurized condition varies, depending on the rate of production, the type or the properties of the foamable material, an intended use of the foamable material, the shape of the mold, the expansion ratio or the desired properties of the shaped foam, etc. The above embodiment can be flexibly adapted for achieving various pressurized conditions.

As other embodiments regarding pressurization, there is an embodiment in which the hermetically closed cavity is reduced in volume, or an embodiment in which the hermetically closed cavity is heated, to thereby effect expansion of the gas. In the embodiment in which the volume of the hermetically closed cavity is reduced, the cavity may, by way of example, be hermetically closed using a cylinder and a piston. In this case, the piston is slidably moved in the cylinder, to thereby reduce an internal volume of the cylinder and thus place the inside of the cylinder under the pressurized condition.

The pressurized condition can be obtained in a manner such that the pressure in the mold cavity is increased by injecting the foamable material, or the pressure in the mold cavity is reduced from a certain level to a desired level. A foamed state of a shaped foam obtained from the foamable material, such as an expansion ratio, the size or the form of the cells, etc., depends on the pressure in the mold cavity. Therefore, a shaped foam in a uniformly foamed state or a shaped foam partially having a desired foamed state can be obtained by varying the pressure under the pressurized condition.

In the foam molding method, the controlling step is started after the start of injection of the foamable material into the cavity.

Thus, in the present invention, the controlling step is conducted under predetermined conditions.

The maintaining step need not necessarily be started under the pressurized condition. As indicated in Fig. 5(b), the mold cavity may be further pressurized after the pressurized condition is achieved [Fig. 5(b)-(iii)], and the maintaining step may be started when predetermined conditions are achieved [Fig. 5(b)-(iv)].

In the foam molding method, the controlling step may include a step of discharging a gas in the mold cavity to the outside. As an alternative embodiment, the volume of the mold cavity may be increased according to the volume of the foamable material injected into the mold cavity.

The pressure to be maintained in the above-mentioned manner is appropriately determined by taking into consideration the viscosity and the flow characteristics of the foamable material, the shape, the size, the expansion ratio and the properties of the shaped foam, the shape, the size, the intended use of the mold, etc. In the case of a conventional foamable material being used, a pressure lower than 0.1 Kg/cm² is unsatisfactory in terms of controlling the foaming. On the other hand, at a pressure higher than the pressure of injection of the foamable material, there is a risk of reverse flow of the foamable material from the mold to an injection nozzle. Therefore, it is preferred that in the controlling step a pressure in the mold cavity is controlled to 0.1 Kg/cm<2> (in terms of a gauge pressure) or more and equal to or less than the pressure of injection of the foamable material. The pressure control in the present invention means a control operation that enables a variable pressure in the mold cavity to be maintained preferably substantially within the above-mentioned range. The pressure control does not mean maintaining the pressure exactly at the same level, and includes a case in which the pressure temporarily increases or decreases.

In the foam molding method, the step of releasing the pressurized condition of the cavity of the mold may include a step of opening the hermetically closed mold.

The present invention also provides a foam molding apparatus for a foamable material as defined in claim 8. This apparatus comprises not only the pressurizing means, but also the controlling means adapted to control the pressure in the cavity, and appropriately controls the flow and the foamed state of the foamable material. By this arrangement, uniform foaming can be enhanced.

In the above foam molding apparatus, the pressurizing means may include means which supplies a predetermined gas to the cavity of the mold.

In the foam molding apparatus, the pressurizing means may control the discharge valve so as to enable the cavity to be hermetically closed before injection of the foamable material. Thus, the present invention can be carried out by arranging the apparatus to be capable of first closing the cavity with an appropriate timing and then injecting the foamable material.

In the foam molding apparatus, the controlling means may control the pressure in the mold cavity to a predetermined level by appropriately opening or closing the discharge valve.

The foam molding apparatus may further comprise a pressure gauge for measuring the pressure in the cavity of the mold and the controlling means may automatically open or close the discharge valve, based on results of measurement conducted by the pressure gauge, to thereby control the pressure in the cavity of the mold to the predetermined level.

The apparatus may further comprise a flowmeter for measuring a flow rate of the foamable material injecting into the cavity of the mold, and the controlling means may automatically open or close the discharge valve, based on results of measurement conducted by the flowmeter, to thereby control the pressure in the cavity of the mold to the predetermined level.

Further, it is preferred that in the foam molding apparatus the controlling means automatically open or close the discharge valve before or after starting injecting the foamable material into the cavity of the mold, to thereby control the pressure in the cavity of the mold. By this arrangement, as compared to simply foaming the material under the pressurized condition, more uniform foaming can be attained. A shaped foam having a uniform expansion ratio can be obtained. Problems such as a deficiency in strength or variations in strength of a shaped foam, or occurrence of defective products can be suppressed.

In the foam molding apparatus, the predetermined level of the pressure in the mold cavity should be 0.1 Kg/cm<2> or more (in terms of a gauge pressure). Without departing from the object of the present invention, the pressure may be reduced from the above-mentioned range a plurality of times by positively increasing or decreasing the pressure. However, if the pressure is made higher than the pressure of injection, it becomes impossible to inject the foamable material into the mold, and reverse flow of the material from the mold to the injection nozzle occurs.

The present invention can be carried out using various molds having different shapes. A position of the tube passage or discharge valve as the pressure controlling means can be arbitrarily determined. However, from the viewpoint of controlling the pressure in the cavity, if the tube passage is filled with the foamable material, it becomes difficult to control the pressure in the cavity. Therefore, in the foam molding apparatus, it is preferred that the tube passage be disposed in a region in the cavity of the mold that is finally filled with the foamed material which has been foamed. With this arrangement, the pressure control can be easily conducted until the time of completion of the filling of the mold cavity. The tube passage may not necessarily be provided in the inner wall surface. In a case that the material is injected using a plurality of injection nozzles arranged around the periphery of the mold cavity, the tube passage is preferably provided in a region which is finally filled with the material. The tube passage may be disposed in a manner such that it is projected into the mold cavity, with a distal end of the passage being disposed in a region that is finally filled.

In the foam molding apparatus, the cavity of the mold may have an elongated form extending in one direction and the injection means may be provided on one end of the mold in a longitudinal direction thereof, with the tube passage being provided on an opposite end of the mold. In the case of the mold having an elongate cavity, a pressurized condition can be easily obtained and the pressure in the cavity can be easily controlled, by providing the injection means on one end of the mold and the tube passage on the other end of the mold. The same effects can be obtained by providing the injection means in a central part of the mold and the tube passage on the other end of the mold.

In the present invention, a shaped foam having a uniformly foamed state can be automatically produced by shifting the injection means relative to the mold. To this end, in the foam molding apparatus, the injection means may include an injection nozzle for injection of the foamable material, and the injection nozzle may be fixed to the mold or capable of free movement relative to the mold. With this arrangement, the foam molding apparatus can be made simple in structure. Further, an automatic production system for producing a shaped foam and ease of maintenance can be achieved. In the present invention, the injection nozzle may be fixed, with an immovable injection opening (a distal end of the nozzle). Otherwise, the injection nozzle itself may be fixed, with the injection opening being vertically movable or capable of oscillation.

### BRIEF DESCRIPTION OF THE DRAWINGS

Fig. 1 is a general view of a foam molding apparatus according to an embodiment of the present invention.
Fig. 2 is a functional block diagram of a controlling means.
Fig. 3 is a general view of a mixing device according to an embodiment of the present invention.
Fig. 4(a) is an explanatory view for explaining an effect of pressurization in the present invention, showing a cross-sectional view of a mold having a cylindrical cavity.
Fig. 4(b) is a cross-sectional view of a mold into which a foamable material is injected for diffusion in a mold cavity.
Fig. 5 shows a graph indicating the relationship between an amount of injection of the foamable material and a pressure in the mold cavity.
Fig. 6 is a perspective view of a tooth brush having a grip portion on a surface of which shaped foams are formed according to the method or the apparatus of the embodiment of the present invention.
Fig. 7 is a circuit system diagram of a foam molding apparatus according to another embodiment of the present invention.
Fig. 8(a) is a schematic illustration of a mold, wherein the mold is placed in a predetermined position.
Fig. 8(b) is a schematic illustration of the mold, wherein the foamable material is being injected into the mold.
Fig. 8(c) is a schematic illustration of the mold, wherein a shaped foam obtained by foaming the injected foamable material is being cured.
Fig. 8(d) is a schematic illustration of the mold, wherein the shaped foam after curing is being removed from the mold.
Fig. 9(a) is a schematic illustration of a mold, wherein the mold is placed in a predetermined position.
Fig. 9(b) is a schematic illustration of the mold, wherein a foamable material in which gas is dispersed is being injected into the mold.
Fig. 9(c) is a schematic illustration of the mold in which the injected foamable material is being foamed and heat cured.
Fig. 9(d) is a schematic illustration of the mold, wherein a shaped foam after curing is being removed from the mold.
Fig. 10(a) is a schematic illustration of a mold, wherein the mold is placed in a predetermined position.
Fig. 10(b) is a schematic illustration of the mold, wherein a foamable material in which gas is dispersed is being injected into the mold.
Fig. 10(c) is a schematic illustration of the mold, wherein the mold is compressed after (or during) foaming of the injected foamable material, followed by heat curing.
Fig. 10(d) is a schematic illustration of the mold, wherein a shaped foam after curing is being removed from the mold.
Fig. 11(a) is a schematic illustration of a mold, wherein the mold is placed in a predetermined position.
Fig. 11(b) is a schematic illustration of the mold, wherein a foamable material in which gas is dispersed is being injected into the mold in a hermetically closed state.
Fig. 11(c) is a schematic illustration of the mold, wherein each of the mold halves is moved backward by a predetermined amount as soon as the foamable material is injected into the mold, to thereby enhance expansion of a pressurizing gas in the foamable material and thus foam the foamable material, which is then heat cured.
Fig. 11(d) is a schematic illustration of the mold, wherein a shaped foam after curing is being removed from the mold.
Figs. 12 (a), 12(b) and 12(c) show an embodiment of a method in which using a pressure press-forming method, a layer of a shaped foam is formed on a surface of a molded product made of plastic.

### BEST MODE FOR CARRYING OUT THE INVENTION

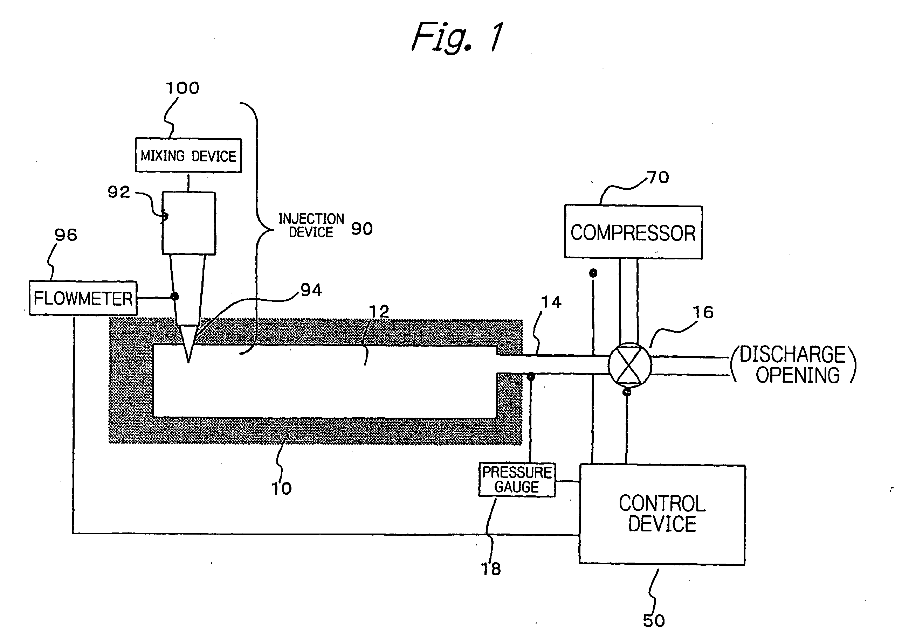

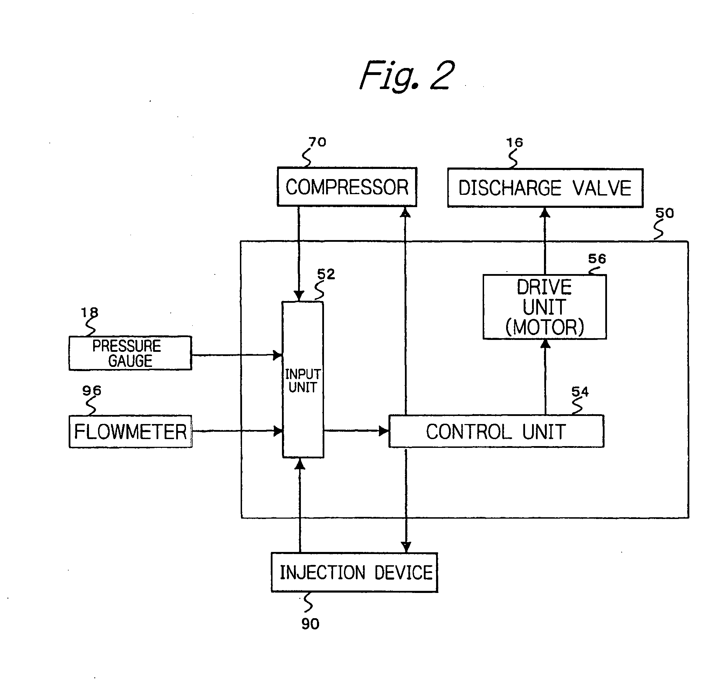

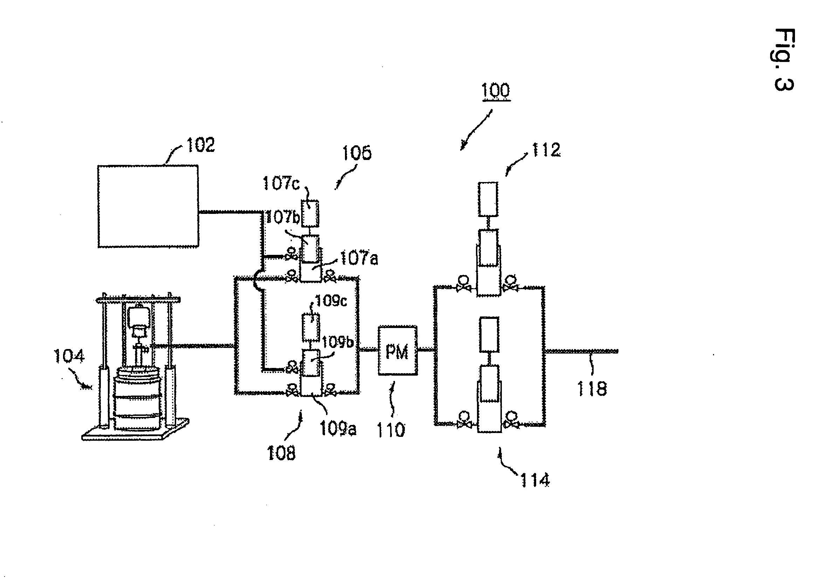

Hereinbelow, referring to the drawings, description is made with regard to a foam molding apparatus according to an embodiment of the present invention. Fig. 1 is a schematic illustration of a general construction of the foam molding apparatus. Fig. 2 is a functional block diagram of a control device. Fig. 3 shows a general construction of a mixing device.

### < A. Construction of Foam Molding Apparatus >

### (1) Foamable Material

A heat curable composition used as a foamable material in an embodiment of the present invention is prepared by mixing, with a gas, a material to be foamed which contains polyurethane as a main component. A composition of the material to be foamed is obtained as follows. First, to obtain a polyurethane prepolymer, polyether polyol and diphenylmethane diisocyanate are subjected to a reaction at 80°C for 2 hours, to thereby obtain an urethane prepolymer having a terminal active isocyanate group which has a terminal NCO content of 2.4 % and a viscosity of 100000 cps/20°C. To obtain an inactivated solid polyamine used as a latent curing agent, 76. 9 parts by weight of 1,12-dodecanediamine (melting point: 71°C) having an average particle size of about 8 microns and 23.1 parts by weight of fine particles of titanium oxide having an average particle size of about 0.02 micron are mixed, and the resultant mixture is ground in a jet mill. As a result, 100 parts by weight of a fine particles-coated polyamine having an average particle size of about 8 microns is obtained. Subsequently, 50 parts by weight of the above-mentioned polyurethane prepolymer having a terminal active isocyanate group is mixed with 5 parts by weight of the latent curing agent, 15 parts by weight of calcium carbonate, 10 parts by weight of carbon and 20 parts of a plasticizer, to thereby obtain a one-pack thermosetting or heat curable polyurethane resin having a heat curing critical temperature of about 80°C, as a material to be foamed in the present invention. This material to be foamed is mixed with a gas, to thereby obtain a foamable material. The material to be foamed will be described later in detail.

The type of foamable material in the present invention is not particularly limited. A material other than a thermosetting or heat curable polyurethane resin can also be used, as long as it is capable of being cured at room temperature, or of being cured or cross-linked when heated or irradiated with ultraviolet rays. A thermoplastic resin which is capable of hot-melting and solidifying when cooled to room temperature can also be used. Examples of foamable materials include materials capable of being cured, cross-linked or solidified from a fluid state, such as polyurethane resins, silicone, polyester, polypropylene, polyethylene, polycarbonate, acrylic resins and copolymers thereof, and synthetic rubbers, natural rubbers, synthetic resins, natural resins, and so on. Examples of foamable materials include materials called elastomers.

### (2) Mold

Fig. 1 shows a mold which is used in an embodiment of the present invention. Fig. 1 shows a longitudinal cross-section of a mold 10 having a cavity 12 in a laterally elongated form (such as in the form of a cylinder or parallelepiped). An injection device 90 as an injection means is provided on one side of the mold (left side in Fig. 1). A tube 14 and a discharge valve 16, and a control device 50 as a controlling means, are each provided on the other side of the mold. In this embodiment, the cavity has a diameter φ of 25 mm and a length L of 800 mm.

The tube 14 allows communication between the cavity 12 and a discharge opening (external air), and the discharge valve 16 is provided in an intermediate part of the tube 14. The discharge valve 16 is a switching valve, which functions to permit communication between the discharge opening and the cavity 12, and which also functions to permit communication between a compressor 70, as a pressurizing means, and the cavity 12. The discharge valve is automatically switched between these two functions by means of the control device 50 or the compressor 70. The discharge valve may be switched manually by an operator, if desired. A tube for the pressurizing means and a tube for the controlling means need not necessarily be the same. Different tubes may be independently provided for the pressurizing means and the controlling means.

A pressure gauge 18 is provided in the tube 14 so as to measure the pressure in the cavity 12. A heating means (not shown) is provided around the mold 10 so as to heat the foamable material. The heating of the foamable material is conducted by electric resistance heating, infrared heating, electromagnetic induction heating, ultrasonic induction heating, high-frequency dielectric heating, and so on. The mold may be directly or indirectly heated by the heating means.

### (3) Injection Means

The injection device 90, as the injection means, is provided on the left upper side of the mold 10. The injection device 90 comprises an injection nozzle 92 adapted to apply a pressure to the foamable material and supply the material into the cavity 12 of the mold 10 and a mixing device 100 for mechanically mixing the material to be foamed with a gas, to thereby prepare the foamable material. As the mixing device 100, a conventional mixing device can be used, which is described later in detail. The injection nozzle 92 can move only in a vertical direction relative to the mold 10. The injection nozzle 92 and the mixing device 100 are controlled either by means of the control device 50 or manually.

It is preferred that the injection opening 94 provided on a distal end of the injection nozzle 92 be a fixed type. However, the injection opening 94 may have an oscillating function or may be moved vertically up and down. The injection opening 94 may be switchable between a fixed state and an oscillating state. This arrangement makes it possible to combine pressurization and injection, and to foam the foamable material under various conditions.

A flowmeter 96 is connected to one end of the injection nozzle 92 so as to measure a rate of flow of the foamable material into the cavity 12. Results of measurement are transmitted from the flowmeter 96 to the control device 50 as the controlling means, which will be described later.

### (4) Pressurizing Means

The compressor 70, as the pressurizing means, is connected to the discharge valve 16. A predetermined gas from the compressor 70 can be supplied to the cavity 12 by switching the discharge valve 16. Preferably, the pressurizing means is capable of switching the discharge valve 16 with an appropriate timing. More preferably, the pressurizing means functions to open and close the discharge valve continuously and automatically according to a rate (amount) of injection of a foamable material, thus effecting pressurization and discharge of a gas. The compressor 70 may be directly communicated with the cavity 12, without using the discharge valve 16, so as to supply the gas into the cavity.

### (5) Controlling Means

The discharge valve 16 is adapted to be controlled by the control device 50 as the controlling means. The control device 50 controls the switching of the discharge valve 16, thus opening and closing the discharge valve 16 in an appropriate manner. Fig. 2 is a functional block diagram of the control device 50.

As shown in Fig. 2, the control device 50 comprises an input unit 52, a control unit 54 and a drive unit 56. The input unit 52 receives signals indicative of results of measurements transmitted from the pressure gauge 18 and the flowmeter 96, and transfers these signals to the control unit 54. The input unit 52 also receives signals from the compressor 70 and the injection device 90. The control device 54 comprises a CPU, a memory, etc. and the CPU appropriately executes a program (software) stored in the memory. If necessary, a predetermined pressure value, a pressure range and a flow rate are stored in the memory (not shown) provided in the control unit. The control device 54 may comprise exclusive hardware (a processing circuit). For example, the control device 54 controls the opening/closing of the discharge valve 16 through the drive unit 56, based on the results of measurement transmitted from the pressure gauge 18. In the embodiments described below, the control device 50 functions as part of the pressurizing means and the injection means, and controls the discharge valve 16, the compressor 70 and the injection device 90.

### < B. Foam Molding Method >

Hereinbelow, description is made with regard to a method (a foam molding method) for foaming the foamable material in the cavity of the mold of the above-mentioned foam molding apparatus, to thereby mold the foamable material.

### (1) Foam Molding Method 1

A foam molding method 1 is an embodiment indicated in Fig. 5(b), wherein injection of the foamable material is started when the cavity 12 is placed under atmospheric pressure, and the pressurized condition is achieved by injection of the foamable material. Theoretically, to obtain a shaped foam having an expansion ratio of n:1, the pressurized condition of the cavity should be maintained at a predetermined level until the foamable material in an amount corresponding to 1/n the volume of the cavity is injected into the mold.

### (S1) Step of Providing Mold 10

First, for carrying out the invention, the mold 10 is provided.

### (S2) Step of Pressurization

Next, the cavity 12 of the mold 10 is placed under a pressurized condition.
(S2-1) In this embodiment, first, before injection of the foamable material is started, the discharge valve 16 is opened, to thereby place the cavity 12 under atmospheric pressure. As indicated at (i) in Fig. 5(b), the pressure (a gauge pressure) is 0 Kg/cm², and the amount of injection is 0 cc.

### (S2-2) Step of Hermetically Closing Cavity

Next, the control device 50, which functions as the pressurizing means, closes (controls) the discharge valve 16 before injection of the foamable material is started. Consequently, the cavity 12 is shielded from external air, and is thus hermetically closed.

### (S2-3) Injection Step

After the cavity is hermetically closed, the control device 50 controls the injection device 90, to thereby inject the foamable material from the injection nozzle 92 into the cavity 12. The foamable material which has been injected foams instantly, and fills a space in the cavity 12.

As an amount of foamable material injected increases, the pressure in the hermetically closed cavity 12 increases (Fig. 5(b)-ii). When the amount of injected material reaches a certain level, the pressure in the cavity becomes 0.1 Kg/cm² or more, and the pressurized condition in the present invention is achieved (Fig. 5(b); iii-iv). In this embodiment, the pressurized condition of the cavity 12 is achieved by injecting the foamable material while closing the discharge valve 16. The injection device 90 and the mixing device 100 may be manually operated.

### (S3) Foaming Step

The injection device 90 further injects the foamable material into the cavity 12 that has been placed under the pressurized condition. Since the injected foamable material is subject to the pressurized condition, foaming of the injected foamable material can be appropriately controlled. The injection of the foamable material is continued, while the cavity 12 is filled with foamable material that has been foamed.

### (S4) Controlling Step

In this embodiment, while the foaming step is being conducted, the pressure in the cavity 12 under the pressurized condition is substantially maintained at a predetermined level until the amount of injected foamable material reaches a predetermined level.
(S4-1) Specifically, the flowmeter 96 effects sequential measurement of the flow rate of the foamable material injected into the cavity, and results of measurement are transmitted to the measuring device 50.
(S4-2) The input unit 52 of the control device 50 receives the results of measurement. The control unit 54 determines whether the value of measurement corresponds to the amount of filling which has been preliminarily determined. In this embodiment, it is determined that the measurement value corresponds to a predetermined filling ratio, based on the fact that the amount of injected foamable material determined as a result of measurement is equal to about 1/n the volume of the cavity 12 (the expansion ratio: n:1).
(S4-3) The control device 50 operates the drive unit 56 until it is determined that the measurement value corresponds to a predetermined flow rate, and automatically opens the discharge valve 16 (the controlling step is commenced).
(S4-4) The gas present in the cavity 12 is discharged through the discharge valve 16 that has been opened. By discharging the gas from the cavity, the pressurized condition of the cavity, into which the foamable material is injected, is substantially maintained at a predetermined level (Fig. 5(b); iv-v).

The degree of opening of the discharge valve 16 is determined as being such that the increased pressure in the cavity 12 under the pressurized condition does not increase/decrease, in consideration of the amount of gas to be discharged and the foamable material to be injected. The controlling step is carried out (for a predetermined time period) until the filling of the foamable material is completed. If the pressure in the cavity lowers due to an amount of gas discharged being too large, the control unit 54 closes the discharge valve 16, or reduces the degree of opening of the discharge valve 16, by way of the drive unit 56.

### (S5) Releasing Step

After completion of filling, the pressurized condition of the cavity 12 is released. In this embodiment, the discharge valve 16 is automatically opened by the control device 50, to thereby open the hermetically closed mold (Fig. 5(b); vi-vii).

### (S6) Heating and Removal Step

The mold 10 is heated by electric resistance heating. The foamable material is cured, and then removed from the mold 10.

According to another embodiment, the controlling step S4 is not carried out, and, immediately after the start of filling, controlling an increase or a decrease of the volume of the mold cavity is started so that the pressure in the cavity can be maintained at a predetermined level, based on the amount of injection of the foamable material.

### (2) Foam Molding Method 2

A foam molding method 2 is an embodiment indicated in Fig. 5(c). Before injection of the foamable material, the cavity 12 is hermetically closed, and a predetermined gas is supplied in a predetermined amount. Thus, in this embodiment, the pressurized condition is already achieved when injection of the foamable material is started.

In the foam molding method 2 also, the step S1 of providing the mold 10, the foaming step S3, the releasing step S5 and the heating and removal step S6 are conducted in the same manner as in the foam molding method 1. Hereinbelow, the step S2 of pressurization is described.

### (S2) Step of Pressurization

In this embodiment, the step of pressurization comprises the following sub-steps.

### (S2-7) Step of Hermetically Closing Cavity

Before injection of the foamable material, the control device 50, which acts as the pressurizing means, switches the discharge valve 16 for communication with the compressor 70, to thereby hermetically close the cavity 12.

### (S2-8) Step of Supply of Gas

The control device 50 controls the compressor 70, to thereby supply a predetermined gas to the hermetically closed cavity 12. Specifically, atmospheric air is supplied to the cavity 12. The pressure gauge 18 sends a signal indicative of results of measurement to the control device 50. When the value of measurement reaches a predetermined pressure, the control device 50 stops operation of the compressor 70, and closes the discharge valve 16, so that the compressor 70 is cut off from the cavity 12. By carrying out this step of supplying gas, the cavity 12 is placed under the pressurized condition (Fig. 5(c)-i).

After the pressurized condition is achieved, the foamable material is injected and foamed under the pressurized condition. Since the mold 10 is hermetically closed, the pressure in the cavity increases as the amount of injection increases (Fig. 5(c)-ii).

### (S4) Controlling Step

While the foaming step is being carried out, the pressurized condition of the cavity 12 is maintained, according to the time for injection and the amount of foamable material injected. In this embodiment, the pressure in the cavity 12 and the amount of material injected are measured, and based on the results of these measurements the controlling step is performed.
(S4-6) Specifically, the pressure gauge 18 conducts sequential measurement of the pressure in the cavity 12, and sends a signal indicative of results of measurement to the control device 50. The flowmeter 96 conducts sequential measurement of the flow rate of the injected material, and sends a signal indicative of results of measurement to the control device 50.
(S4-7) The input unit 52 of the control device 50 receives these signals. The control unit 54 determines whether the values of measurements correspond to the predetermined flow rate and pressure.
(S4-8) When the control device 50 determines that the measurement value corresponds to the predetermined pressure at which the maintaining step should be started, the control device 50 controls the drive unit 56 and automatically opens the discharge valve 16 (the maintaining step is started; Fig. 5(c)-v)(iv-vi).
(S5-9) The gas present in the cavity 12 flows through the discharge valve 16, which has been opened, and is discharged to the outside. As a result of discharging the gas, the pressurized condition of the cavity, into which the foamable material is injected, can be maintained at a predetermined level (Fig. 5(c)-v). Preferably, as indicated in the embodiment described below, the cavity is maintained at a predetermined pressure by discharging the gas in the cavity through the discharge valve 16 while supplying a compressed gas from the compressor 70 to the cavity.

If desired, in the controlling step S4, the pressure in the cavity may not be maintained at a predetermined pressure. The pressure may be gradually increased or decreased.

### < C. Other Embodiments >

### (1) Step S2 of Pressurization

The step S2 of pressurization may be carried out by combining the step of supplying gas and the step of injection of the foamable material. This embodiment is indicated in Fig. 5(d).

In this embodiment, first, the mold and the compressor 70 are communicated with each other, and a gas is supplied for pressurization. This state is indicated at i in Fig. 5(d). The pressure in the cavity 12 has not yet accomplished a level required for achieving the pressurized condition. Subsequently, the discharge valve 16 is switched, to thereby hermetically close the mold 10. In this state, the foamable material is injected into the cavity. As the amount of foamable material that is injected increases, the pressure in the cavity 12 increases (Fig. 5(d)-ii), and the pressurized condition is achieved (Fig. 5(d)-iii).

In this embodiment, the maintaining step S4 may be carried out (Fig. 5(d)-iv). In the embodiment shown in Fig. 5(d), the pressure is gradually increased within the predetermined pressure range to be maintained (Fig. 5(d)-v).

### < D. Description of Foamable Material and Mixing Device >

### (1) Mixing Device 100 (Fig. 3)

As shown in Fig. 3, the mixing device 100 comprises a gas supply device 102 for supply of a gas, such as air or nitrogen, a pump 104 for pumping the material to be foamed, a pair of piston pumps 106 and 108, a premixer 110 and a pair of pressurizing devices 112 and 114. The material to be foamed is mixed with the gas by means of the piston pumps 106 and 108 and the premixer 110, to thereby form a foamable material. The foamable material is transferred from the pressurizing devices 112 and 114 through a passage 118 to the injection nozzle 92, and is injected from the injection nozzle 92 into the cavity 12.

The gas is supplied from the gas supply device 102 to cylinders 107a and 109a of the piston pumps 106 and 108 in a batchwise manner. Subsequently, the material to be foamed is supplied from the pump 104 to the cylinders 107a and 109a of the piston pumps 106 and 108 in a batchwise manner. Thereafter, pistons 107b and 109b are pushed into the cylinders 107a and 109a by means of actuators 107c and 109c, thus supplying the foamable material comprising the gas and the material to be foamed to the premixer 110. The piston pumps 106 and 108 are arranged, such that during a step in which one piston pump receives the gas and the material to be foamed, the other piston pump supplies the foamable material comprising the gas and the material to be foamed to the premixer 110. By this arrangement, the piston pumps 106 and 108 are capable of supplying the foamable material to the premixer 110 in an alternate manner.

The foamable material from the piston pumps 106 and 108 is premixed in the premixer 110 and supplied to the pressurizing devices 112 and 114. The pressurizing devices 112 and 114 alternately supply the foamable material in a predetermined amount into the injection nozzle 92. The foamable material is passed through a dispersion tube 118 connecting each of the pressurizing devices 112 and 114, and the injection nozzle 92, to thereby finely disperse the gas in the foamable material. The foamable material, with the gas being finely dispersed therein, is injected from the injection nozzle 92 into the mold cavity 12. The injected foamable material is foamed due to expansion of the gas, and fills the mold cavity 12. After completion of filling, the material in the cavity is heat cured. The expansion ratio of the foamable material can be made to be 2 to 5:1.

### (2) Heat Curable Composition as Material to be Foamed

International Publication Number WO95/26374, which corresponds to an earlier application of the Applicant, discloses a detail of an embodiment of the material to be foamed in the present invention. To summarize, the material to be foamed in the present invention comprises: a polyisocyanate compound, an polyurethane prepolymer having a terminal active isocyanate group obtained by reacting a polyol component with an excess amount of a polyisocyanate compound, or a combination thereof; and a fine particles-coated polyamine as an inactivated solid polyamine type latent curing agent, the solid polyamine type curing agent being inactivated by coating the active amino groups on the surface of solid polyamine particles having a melting point of 50°C or more and having an average particle diameter of about 20 microns with fine particles having an average particle size of 2 microns. The active amino groups on the surface of the solid polyamine are coated with the fine particles so that the weight ratio of the solid polyamine to the fine particles becomes 1/0.001-0.5.

Specifically, examples of polyisocyanate compounds include aromatic, aliphatic and alicyclic polyisocyanate compounds, such as tolylene diisocyanate (TDI), diphenylmethane diisocyanate, 3,3'-dimethyl-4,4'-biphenylene diisocyanate, 1,4-phenylene diisocyanate, xylylene diisocyanate, tetramethylxylylene diisocyanate, naphthylene diisocyanate, dicyclohexylmethane-4,4'-diisocyanate, crude TDI, polymethylene polyphenyl isocyanate, isophorone diisocyanate, hexamethylene diisocyanate, hydrogenated xylylene diisocyanate, and isocyanurate, carbodiimide or biuret compounds of these isocyanate compounds, which may be used alone or in combination of two or more thereof.

The polyurethane prepolymer having a terminal active isocyanate group is prepared by reacting a polyol component with an excess amount of the polyisocyanate compound so that a ratio of NCO groups of the polyisocyanate compound to OH groups of the polyol component becomes 1.1 - 3.5:1. The reaction is carried out at room temperature to 60 - 100°C for 1 - 24 hours in the presence of a catalyst (e.g., an organic tin compound, such as dibutyltin dilaurate, a bismuth compound, such as bismuth octylate, a tertiary amine compound, etc.). As a result, a polyurethane prepolymer having a terminal active isocyanate group content of 0.5 - 10 % by weight and a viscosity of 3000 - 50000 cps/20°C.

Examples of polyol components used in the present invention include: polyether polyols which are made by addition polymerization between polyhydric alcohol, such as ethylene glycol, propylene glycol, glycerine, trimethylol propane, pentaerythritol, sorbitol, sucrose, etc., and alkylene oxide, such as ethylene oxide, propylene oxide, or a mixture of propylene oxide and ethylene oxide, etc.; ethylene glycol, propylene glycol and oligoglycols thereof; polyols of butylene glycol, hexylene glycol, polytetramethylene ether glycols; polycaprolactone polyols; polyester polyols, such as polyethylene adipate; polybutadiene polyols; higher fatty acid esters having a hydroxyl group, such as castor oil; polymer polyols which are prepared by graft polymerization of polyether polyols or polyesters with a vinyl monomer.

The solid polyamine used as a latent curing agent for the polyurethane prepolymer is an aromatic or aliphatic polyamine having a melting point of 50°C or more and having a solid form at room temperature. Examples of solid polyamines include: aromatic solid polyamines, such as 4,4'-diaminodiphenylmethane, 2,4'-diaminodiphenylmethane, 3,3'-diaminodiphenylmethane, 3,4'-diaminodiphenylmethane, 2,2'-diaminobiphenyl, 2,4'-diaminobiphenyl, 3,3'-diaminobiphenyl, 2,4-diaminophenol, 2,5-diaminophenol, o-phenylene diamine, m-phenylene diamine, 2,3-tolylene diamine, 2,4-tolylene diamine, 2,5-tolylene diamine, 2,6-tolylene diamine, 3,4-tolylene diamine, etc.; and aliphatic solid polyamines, such as 1,12-dodecanediamine, 2,10-decanediamine, 1,8-octanediamine, 1,14-tetradecanediamine, 1,16-hexadecanediamine, etc., which may be used alone or in combination of two or more thereof. These solid polyamines are normally ground so as to have an average particle diameter of 20 microns or less, preferably 3 - 15 microns.

As an example of a method for inactivating a solid polyamine to thereby obtain a latent curing agent, there is a method of coating the amino groups on the surface of solid polyamine particles with an inactivating agent. As the inactivating agent, use is made of organic or inorganic fine particles, which are fixed to the surface of solid polyamine particles. Examples of fine particles include inorganic compounds, such as titanium oxide, calcium carbonate, clay, silica, zirconia, carbon, alumina, talc, etc.; and organic compounds, such as polyvinyl chloride, polyacrylic resins, polystyrene, polyethylene, etc. An average particle diameter of fine particles is 2 microns or less, preferably 1 micron or less. The solid polyamine is inactivated by coating such fine particles on the surface of the solid polyamine particles. The inactivation process is conducted so that the weight ratio of solid polyamine particles/fine particles is about 1/0.001 - 0.5. While grinding the solid polyamine to a predetermined particle diameter, the fine particles are dispersively mixed with the solid polyamine particles, to thereby fix the fine particles to the solid polyamine surface.

The thus obtained polyurethane prepolymer and the inactivated solid polyamine type latent curing agent are used in respective amounts such that an equivalent ratio of polyamine amino groups/isocyanate groups when the polyamine is heated and re-activated becomes 1/0.5 - 2.0.

If necessary, conventional additives in an appropriate amount may be added to a heat curable urethane resin as a heat curable composition that is used as a material to be foamed in the present invention. Examples of additives include catalysts, plasticizers (e.g., dibutyl phthalate, dioctyl phthalate, dicyclohexyl phthalate, diisooctyl phthalate, diisodecyl phthalate, dibenzyl phthalate, trioctyl phosphate, epoxy type plasticizers and polyester type plasticizers, such as adipic acid ester), solvents, thixotropic agents, ultraviolet absorbers, anti-aging agents, tackifiers, dehydrating agents, foaming adjusting agents, viscosity adjusting agents, etc.

The thus obtained heat curable urethane resin is cured by heating. The heat curable urethane resin has critical curing properties, especially with respect to a heating temperature. The heat curable urethane resin is not cured at a temperature lower than 60°C. When the resin is heated to 80°C or more, the inactivated solid polyamine is re-activated and curing starts, and a curing reaction is almost completed.

Subsequently, the material to be foamed is mechanically mixed with a gas by agitation, thus dispersing the gas in the material and forming a foamable material. In this embodiment, air is used as the gas. Needless to say, however, other gases equivalent to air, of which activity is not so high, may be used. A technique for mechanically mixing the material to be foamed with the gas is described in detail in Japanese Patent Application Public Disclosure No. HEI 11-128709.

As has been described above, in the mixing device 100 for obtaining a foamable material used in the present invention (a schematic illustration of the mixing device is shown in Fig. 3), the material to be foamed is mixed with the gas in a desired amount ratio, using the piston pumps 106 and 108. The gas and the material to be foamed are mixed by means of the piston pumps 106 and 108.

The heat curable urethane resin used as the foamable material is injected and foamed at a temperature less than the heat-curing critical temperature. Since the heating temperature is less than the heat-curing critical temperature (about 60°C), the foamable material is foamed without being cured. Next, when the heating temperature is elevated to a temperature equal to or higher than the heat-curing critical temperature of the foamable material (about 80°C), the uncured foamable material is rapidly heated to the temperature equal to or higher than the heat-curing critical temperature, and cured into a predetermined shape within a short period of time of about 10 seconds or more.

A shaped foam obtained according to the method or apparatus in the above embodiments can be applied to a roller, a gasket, a seal material, a buffer, a cushioning material, an anti-slip material, a container, a packaging material, plastic foams of various sizes and shapes, etc. Further, a shaped foam in the present invention can be applied to a cover for an elongate object (e.g., a cable coating), a grip portion of a handle of an automobile or a manually or electrically operated tool, such as a writing tool, a tooth brush, a racket, a bat, a golf club, a stick, a saw, a hammer, a drill, etc. (simply referred to as "a grip portion"), and so on. Such a grip portion can be obtained by forming a shaped foam on a surface of a core material (including a hollow member), and the thus formed shaped foam provides cushioning or anti-slip effects. Upon holding the grip portion, an appropriate feel is imparted to the user. A surface of the shaped foam may be provided with a pattern or a display function.

Such a grip portion can be obtained by providing an elongate core material (not shown) in the cavity 12 of the mold 10 in a longitudinal direction thereof and forming a shaped foam around a periphery of the core material, while foaming a foamable material around the periphery of the core material. By holding in position the core material through a support member (not shown) in the cavity 12 so that the core material is equally spaced from the inner wall surface of the mold 10, the foamable material injected into the cavity 12 of the mold 10 is caused to uniformly adhere to the core material all the way around the periphery thereof, thus achieving a uniform covering. By controlling the pressure in the mold cavity using the control device 50 as the controlling means, foaming of the foamable material that has been injected into the mold cavity by means of the injection device 90 can be controlled around the periphery of the core material. Therefore, a shaped foam can be formed more uniformly around the periphery of the core material.

The core material is preferably a solid core material having a columnar form.

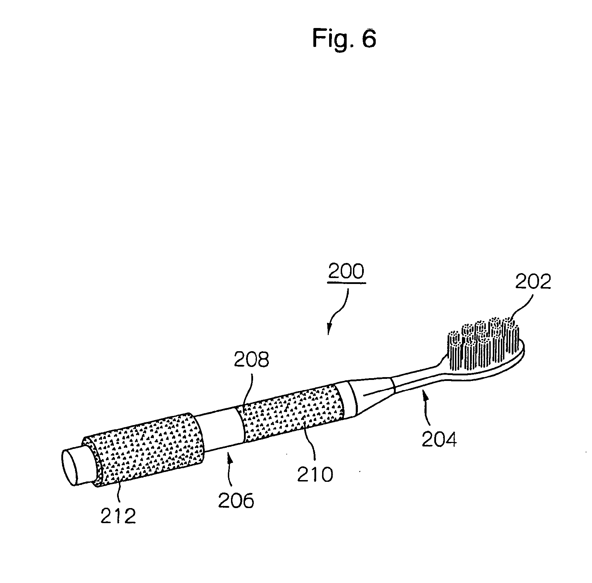

Fig. 6 shows a specific example of a shaped foam obtained by a method and an apparatus described in the above embodiments, which foam is applied to a grip portion of a tooth brush.

As shown in Fig. 6, a tooth brush 200 comprises a brush portion 202, a support portion 204 for supporting the brush portion 202 and a grip portion 206 having a columnar form extending from the support portion 204. The support portion 204 and the grip portion 206 are formed as a one-piece member.

A first shaped foam 210 is provided on a distal side (a side on which the support portion is provided) of the columnar grip portion 206. A second shaped foam 212 is provided on a proximal side of the grip portion 206.

The grip portion 206 includes a recess 208 formed on a distal side thereof, which extends around the periphery of the grip portion 206. The first shaped foam 210 is formed inside the recess 208, with a thickness that is substantially equal to the depth of the recess 208. Therefore, an exterior surface of the first shaped foam 210 is flush with the surface of the grip portion 206.

The second shaped foam 212 is formed on a proximal side of the grip portion 206 so as to cover the surface of the grip portion 206. Therefore, at a portion of the grip portion 206 at which the second shaped foam 212 is provided, the grip portion 206 and the second shaped foam 212 in combination form a diametrically enlarged grip portion.

Thus, the first shaped foam 210 and the second shaped foam 212 are obtained in the form of coverings on the grip portion 206 of the tooth brush 200. The first and second shaped foams provide cushioning and an anti-slip effect. Further, an appropriate feel can be imparted to a user when the user holds the grip portion.

To form the first shaped foam 210 and the second shaped foam 212 on the surface of the grip portion 206, as has been described above, the grip portion 206 is first disposed so as to extend in the cavity 12 of the mold 10 in a longitudinal direction thereof. Then, while foaming a foamable material around the periphery of the grip portion 206, the first shaped foam 210 and the second shaped foam 212 are formed around the periphery of the grip portion 206. In addition, by positioning the grip portion 206 in the cavity 12 through a support member (not shown) so as to be equally spaced from the inner wall surface of the mold 10, the foamable material which has been injected into the cavity 12 of the mold 10 can be uniformly adhered to the core member all the way around a periphery thereof, to thereby obtain a uniform covering.

An embodiment of molding a foamable material so as to cover a surface of a core member according to the present invention has been described above. In this embodiment, the tooth brush shown in Fig. 6 is taken as an example, which comprises the brush portion 202, the support portion 204 for supporting the brush portion 202 and the columnar grip portion 206 extending from the support portion 204, with the first shaped foam 210 and the second shaped foam 212 being formed on a distal side and a proximal side of the grip portion 206, respectively. However, the respective shapes and sizes of the brush portion 202, the support portion 204, the grip portion 206 and the shaped foams 210 and 212, and the number of shaped foams, are not limited to those shown in Fig. 6. A shaped foam can be formed on various types of grip portions. The above-mentioned grip portion is formed by molding a foam onto a surface of the core member. However, this does not limit the present invention. For example, a stiff or soft (flexible) casing (an outer-shape molded product) having a hollow structure with opposing open ends may be provided, and a foamable material may be injected or supplied into a hollow portion of the casing and foamed therein, to thereby obtain a lightweight grip portion. It is preferred that such a casing have a cylindrical form with opposing open ends.

To obtain such a grip portion, a cylindrical casing (not shown) is provided in the cavity 12 of the mold 10 so as to extend in a longitudinal direction thereof, and a foamable material is injected or supplied into the hollow portion of the casing, while foaming the foamable material in the hollow portion, to thereby form a shaped foam inside the casing. When the casing is provided in the mold 10, the casing can be positioned in the mold 10 by adjusting a difference in dimension between the casing and the mold so as to enable the casing to be pressed to some extent by the inner side wall surface of the mold 10. The pressure in the cavity of the mold is controlled by the control device 50 as the controlling means, to thereby control foaming of the foamable material which has been supplied into the hollow portion of the casing by means of the injection device 90. As a result, a shaped foam having a uniformly foamed state can be formed inside the casing.

A material to be foamed as a foamed covering or a filling material for a grip portion of a tooth brush or the like is not limited to a heat curable urethane resin described in one embodiment of the present invention. Silicone or polypropylene can also be used. Further, a material to be foamed is not limited to a heat curable resin or a resin curable at room temperature. Further, a material to be foamed obtained by hot melting a thermoplastic resin (such as polyolefin plastics, engineering plastics, synthetic rubber, a synthetic resin, etc.) can be mechanically mixed with a gas to thereby obtain a foamable material. When a thermoplastic material is used, the material is hot melted before being mixed with a gas and injected and foamed. After foam molding, the material is cooled and hardened, to thereby obtain a shaped foam.

As described in the above embodiments, by placing the cavity of the mold under an appropriately pressurized condition, flowing and foaming of the foamable material can be appropriately controlled. Especially, when use is made of a cylindrical mold, it is possible to suppress flowing of the material in a central region remote from the inner wall surface of the cylindrical mold. Therefore, it becomes possible to suppress deformation of and continuation between closed cells. Consequently, a deficiency in strength due to permanent deformation does not occur, and a shaped foam of high quality and having a good appearance and a uniform expansion ratio with closed cells can be obtained. Further, a reduction in occurrence of defective products and a reduction in production costs can also be achieved.

Further, if the foamable material is injected while shifting the injection nozzle relative to the mold or if a fixed-type injection nozzle is used, a shaped foam of good quality can be formed. Therefore, an arrangement of a foam molding apparatus can be made simple, and ease of maintenance can be achieved. The foam molding method can be carried out using an automated system.

Further, the step of maintaining a pressure in the cavity within a predetermined range and a means therefor enable a shaped foam to be uniform and to have a desired foamed state.

Next, a foam molding apparatus according to another embodiment of the present invention is described.

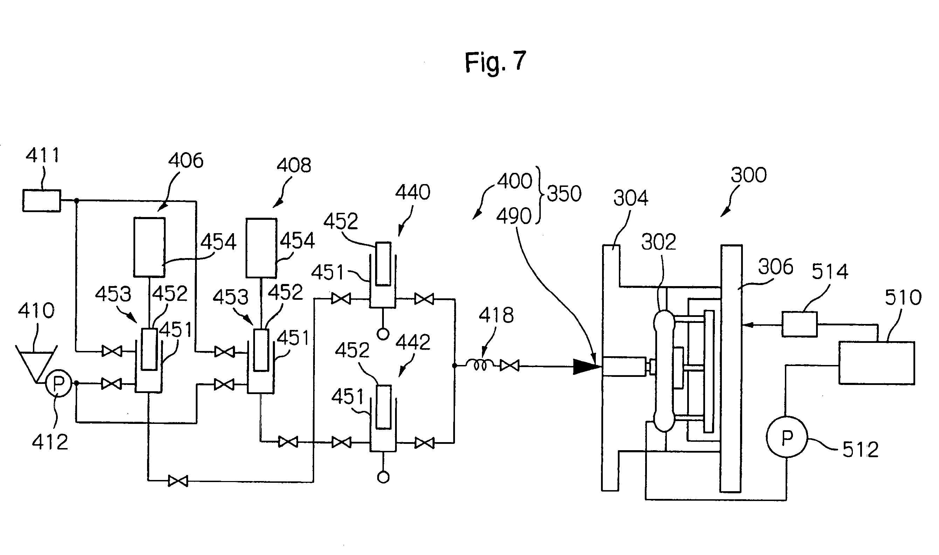

As shown in Fig. 7, the foam molding apparatus in this embodiment comprises a mold 300 having a cavity 302, an injection device 350 capable of injecting a foamable material into the cavity 302 of the mold, a vacuum pump 512 for controlling a pressure in the cavity 302 so as to control foaming of the foamable material which has been injected into the cavity 302 of the mold 300 by means of the injection device 350, and a control device 510 for controlling the vacuum pump 512.

The injection device 350 comprises a mixing device 400 for mechanically mixing a material to be foamed with a gas to thereby form a foamable material, and an injection nozzle 490 for injecting the foamable material into the cavity 302.

The mixing device 400 comprises a gas supply device 411 for supplying a gas, such as air or nitrogen, a pump 412 for pumping a heat curable composition 410 as a material to be foamed, a pair of piston pump devices 406 and 408, and a pair of pressurizing devices 440 and 442. Preferred examples of heat curable compositions as a material to be foamed include heat curable polyurethane, heat curable silicone and other heat curable resins which are commercially available. A thermoplastic resin (a plastic) can be also used by utilizing a process of hot melting and hardening by cooling. The heat curable composition 410 is mixed with a gas by means of the piston pump devices 406 and 408, to thus form a foamable material. The foamable material is transferred from the pressurizing devices 440 and 442 through a dispersion tube 418 to the injection nozzle 490, and then injected into the cavity 302 from the injection nozzle 490.

Each of the piston pump devices 406 and 408 comprises a piston pump 453 and a motor 454 for driving the piston pump 453. In the piston pump 453, gas is supplied from the gas supply device 411 to a cylinder 451 in a batchwise manner. Subsequently, the heat curable composition 410 is supplied from the pump 412 to the cylinder 451 in a batchwise manner. Then, a piston 452 is pressed into the cylinder 451 by means of the motor 454, to thereby supply the foamable material composed of the gas and the heat curable composition 410 to the corresponding pressurizing device 440 or 442. The piston pumps 453 are arranged, such that during a step in which one piston pump 453 receives the gas and the heat curable composition 410, the other piston pump 453 supplies the foamable material comprising the gas and the heat curable composition 410 to the corresponding pressurizing device 440 or 442. Thus, the foamable material is transferred to the pressurizing devices 440 and 442 in an alternate fashion.

The foamable material, which has been transferred from the piston pumps 453, is supplied to the pressurizing devices 440 and 442. The pressurizing devices 440 and 442 alternately supply the foamable material in a predetermined amount through the dispersion tube 418 into the injection nozzle 490. The foamable material is passed through the dispersion tube 418 connecting the pressurizing devices 440 and 442 and the injection nozzle 490, to thereby finely disperse the gas in the foamable material. The foamable material, with the gas being finely dispersed therein, is injected from the injection nozzle 490 into the mold cavity 302. At the time of injection, the gas expands, to thereby foam the foamable material, which then fills the mold cavity 302. After completion of filling, the material in the cavity is heat cured. The expansion ratio of the foamable material can be set at 2 to 5:1.

Next, an operation of a circuit system diagram shown in Fig. 7 is described.

The gas 411 from the gas supply device 411, and the heat curable composition 410 as a material to be foamed that has been transferred through the pump 412, are mixed with each other, by means of the piston pumps 453. Each piston pump 453 comprises the cylinder 451 and the piston 452, and sucks the foaming gas 411 during or after a suction stroke. Subsequently, the cylinder 451 which has been injected with the gas 411 receives the heat curable composition 410 supplied from the pump 412. Subsequently, during a discharge stroke of the piston pump 453, the gas 411 and the heat curable composition 410 are pushed out of the cylinder, while being mechanically mixed with each other, with the gas being dispersed in the heat curable composition 410, to thereby obtain a foamable material. The foamable material (a foamable heat-curable composition) is pressurized by means of a piston pump or a booster pump in the corresponding pressurizing device 440 or 442, and passes through the dispersion tube 418, and is discharged from the injection nozzle 490 into the mold 300. The gas is dispersed in a compressed state in the foamable material. Therefore, when the foamable material is discharged from the injection nozzle 490 under atmospheric pressure, the compressed gas expands instantly, and foams the foamable material.

The mold 300 comprises a first mold half 304 in which a passage for injection is formed, and a second mold half 306 which is disposed in a face-to-face relationship to the first mold half 304. The first mold half 304 and the second mold half 306 are moved towards and away from each other by means of an actuator 514. The control device 510 controls the actuator 514, to thereby enable the first mold half 304 and the second mold half 306 to be moved towards or apart from one another. When the first mold half 304 and the second mold half 306 are brought into contact with each other, the cavity 302 is hermetically closed. In this state, when the foamable material is injected into the cavity 302, the cavity is placed under the pressurized condition. In this state, the vacuum pump 512 is operated in accordance with a command signal from the control device 510, and the pressure in the cavity 302 is reduced, thus controlling the pressure in the cavity 302 and appropriately control flowing and foaming of the foamable material. Thus, by controlling the vacuum pump 512, the pressurized condition of the cavity 302 is controlled, and in the foam molding apparatus, flowing and foaming of the foamable material can be appropriately controlled.

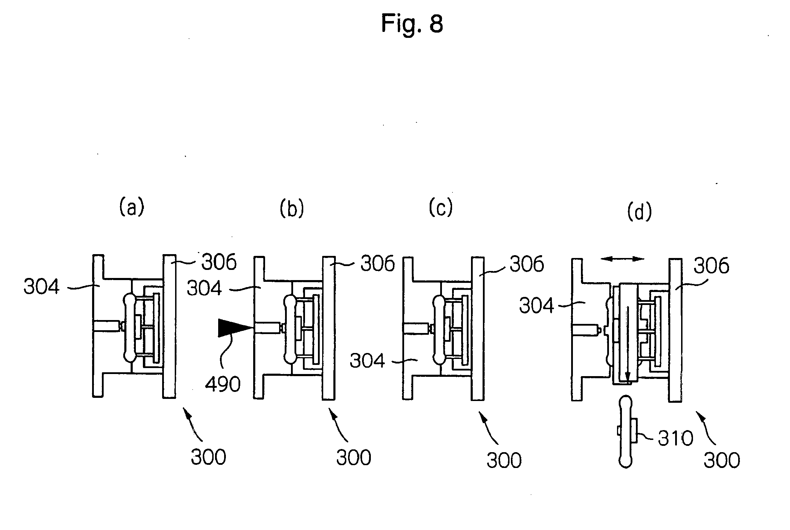

When a shaped foam is formed using the foam molding apparatus shown in Fig. 7, as shown in Figs. 8(a) to (d), the actuator 514 is first operated, to thereby bring into contact with one another the first mold half 304 and the second mold half 306, thus placing the mold 300 with the cavity 302 in a hermetically closed state (Fig. 8(a)).

Next, the foamable material is discharged from the injection nozzle 490 into the cavity 302 of the mold 300. In this state, as described above, the vacuum pump 512 is operated, thus controlling the pressurized condition of the cavity 302 (Fig. 8(b)).

Then, a heating medium or a cooling medium is appropriately flowed through a passage (not shown) provided in the mold, to thereby appropriately heat or cool a shaped foam obtained by foaming the foamable material, thus curing the shaped foam (Fig. 8(c)).

Finally, the actuator 514 is operated, to thereby move apart from one another the first mold half 304 and the second mold half 306, and the shaped foam 310 is removed from the mold (Fig. 8(d)).

In the mold 300 shown in Fig. 7 and Fig. 8, use is made of a female type mold as each of the first mold half 304 and the second mold half 306. This does not limit the present invention. For example, the first mold half and the second mold half may be formed by a female type mold and a male type mold, respectively. In this case, there can be provided an open-mold foam molding method in which a foamable material (a foamable heat-curable composition) is injected into the first mold half of a female type and foamed therein, and the other mold half of a male type is fitted into the female type mold half under a clamping force.

Illustratively stated, an open-mold foam molding method is a foam molding method using a foamable material obtained by mechanically mixing a material to be foamed with gas by means of a piston pump. The method comprises a step of providing a mold comprising a female type mold half and a male type mold half, a step of injecting the foamable material into the female type mold half and foaming the material therein, a step of fitting the male type mold half into the female type mold half under a clamping force, a step of heating at least one of the female type mold half and the male type mold half while clamping these mold halves, to thereby cure a shaped foam obtained by foaming and shaping the foamable material and a step of removing the cured foam from the mold. Thus, the female type mold half and the male type mold half are temporarily released, and a foamable material is injected into the female type mold half and foamed therein, followed by fitting the male type mold half into the female type mold half under a clamping force (that is, press forming is conducted after foaming). Therefore, uniform foaming (a microcell structure) and molding properties (a uniform surface) can be attained, without controlling the pressurized condition of the mold cavity by using a vacuum pump. If a foamable material is simply injected into a mold cavity that is held in a hermetically closed state, foaming air is compressed in the cavity under increased pressure, and the foamable material is molded without being foamed. If the amount of injection of the foamable material is set to be small so as to prevent pressurization in the cavity, the material foams, but moldability (a surface condition, and filling of the material into every part of the cavity) is low. Further, foaming properties (a cell condition) become non-uniform. The open-mold foam molding method is free from such problems.

There can be also provided a closed-mold foam molding method in which a foamable material is injected into the mold in a hermetically closed state and foamed therein, thus filling the mold with the foamed material, followed by curing. This embodiment solves a problem such that since the foamable material is a heat curable composition, the material is cured when the mold is heated, and therefore the material cannot be injected into the entire mold cavity.

Illustratively stated, the closed-mold foam molding method is a foam molding method using, as a foamable material, a heat curable composition obtained by mechanically mixing a material to be foamed with a gas by means of a piston pump. The method comprises a step of providing a mold comprising a first mold half and a second mold half, each being formed by a female type mold, as shown in Figs. 7 and 8, a step of flowing a cooling medium through a passage formed in the mold, to thereby cool the mold to a temperature equal to or lower than a predetermined level (for example, 60°C), a step of injecting a heat curable composition as a foamable material into a cavity of the mold in a hermetically closed state (in this step it is preferable for the pressure in the mold cavity to be controlled by a vacuum pump), a step of allowing the heat curable foamable material to foam in the mold (in this step also it is preferable for the pressure in the mold cavity to be controlled by the vacuum pump), a step of flowing a heating medium through a passage formed in the cavity, to thereby heat the mold and thus cure a shaped foam obtained by foaming the foamable material, and a step of removing the shaped foam from the mold.

In this embodiment, by cooling the mold, it is possible to prevent a heat curable composition as a foamable material from being cured when it is injected into the mold, to thereby ensure that the foamable material can be smoothly injected into the entire mold cavity, thus ensuring uniform foaming (a microcell structure) and moldability (a uniform surface) of the foamable material.

Further, in another embodiment, there is provided a reduced-pressure injection foam molding method for a hermetically closed mold, in which a foamable material is injected into a mold cavity which is preliminarily reduced in pressure, and the material is foamed in the cavity under reduced pressure.

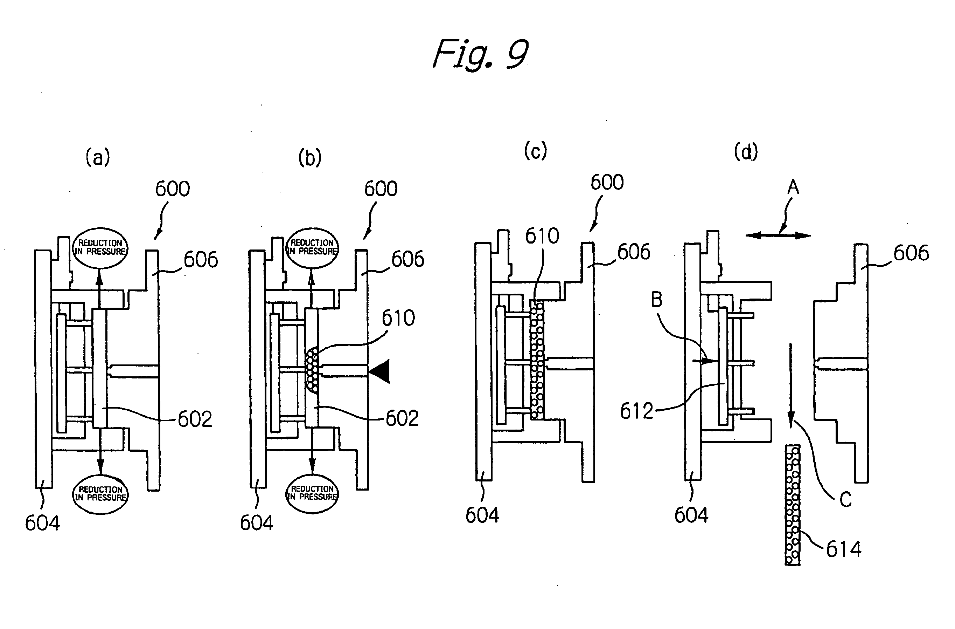

In this embodiment, instead of the mold 300 shown in Fig. 7, a mold 600 shown in Fig. 9 is employed. The other arrangements are the same as those in the embodiment shown in Fig. 7. In the mold 300 shown in Figs. 7 and 8, each of the first mold half 304 and the second mold half 306 is formed by a female type mold. The mold 600 shown in Fig. 9 comprises a female type mold half 604 and a male type mold half 606.

In the reduced-pressure injection foam molding method for a hermetically closed mold, the mold 600 comprising the female type mold half 604 and the male type mold half 606 is placed so as to form a cavity 602 in a hermetically closed state, as shown in Fig. 9(a), and the vacuum pump 512 is then operated to thereby reduce the pressure in the cavity 602 of the mold 600. Subsequently, as shown in Fig. 9(b), a foamable material 610, which is obtained by mechanically mixing a material to be foamed (such as the heat curable composition 410) with gas so as to enable the gas to be dispersed in the material to be foamed, is injected in a predetermined amount into the cavity 602 of the mold 600, which is based on an expansion ratio (in other words, in consideration of a volume after expansion) of the foamable material. In this instance, the vacuum pump 512 is continuously operated to reduce the pressure in the cavity 602 of the mold 600. Thereafter, as shown in Fig. 9(c), the foamable material 610 foams along the cavity of the mold 600, to thereby form a shaped foam. The foamable material is injected into the cavity 602 under reduced pressure, so that foaming (volume expansion) of the foamable material occurs instantly upon injection, due to expansion of the pressurizing gas in the material. Thereafter, by heating the mold 600, the shaped foam is heat cured. Then, as shown in Fig. 9(d), the actuator 514 is operated to thereby move apart from one another the female type mold half 604 and the male type mold half 606 (in the directions indicated by the double-headed arrow A in Fig. 9(d)). A pressing device 612 provided in the female type mold half 604 is moved in the direction indicated by the arrow B in Fig. 9(d), and the shaped foam after curing, that is, an article 614, is removed in the direction indicated by the arrow C in Fig. 9(d).

In this embodiment, a foamable material is injected into the cavity 602 which is placed under reduced pressure. Therefore, the foaming gas in the foamable material is not compressed in the cavity 602, and most of the foaming gas expands. Further, the injected foamable material flows to every part of the cavity, and therefore satisfactory moldability and uniform foaming properties (a cell condition) are obtained.

In a further embodiment, there is provided a reduced-pressure injection foam press-forming method for a hermetically closed mold, in which a foamable material is injected into a mold placed under reduced pressure, foamed therein and shaped by compressing the mold.

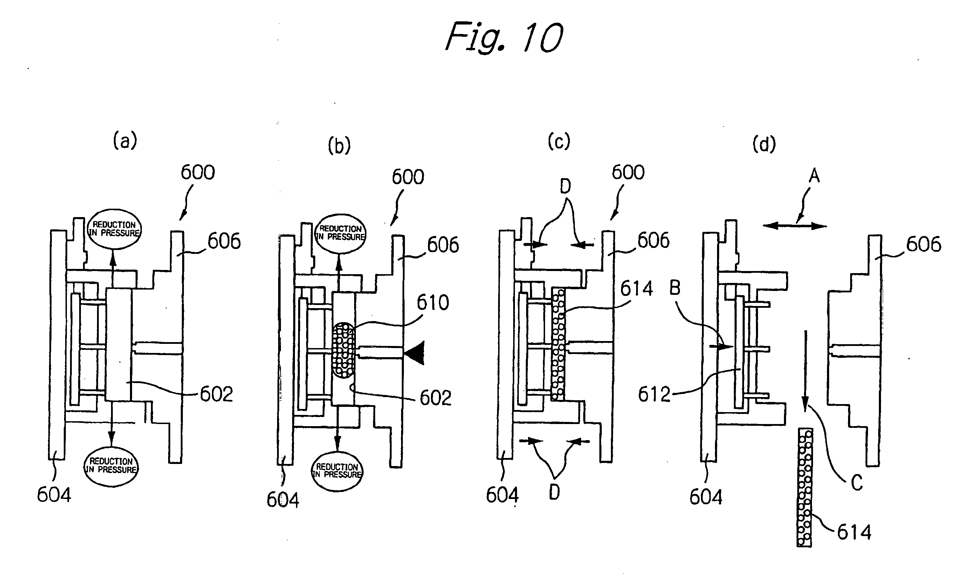

In this embodiment, instead of the mold 300 shown in Fig. 7, use is made of a mold 600 shown in Fig. 10. The other arrangements are the same as those in the embodiment shown in Fig. 7. The mold 600 shown in Fig. 10 is the same as that shown in Fig. 9 and comprises the female type mold half 604 and the male type mold half 606.

In this method, the mold 600 comprising the female type mold half 604 and the male type mold half 606 is provided so as to place the cavity 602 in a hermetically closed state, as shown in Fig. 10(a), and the vacuum pump 512 is then operated to thereby reduce a pressure in the cavity 602 of the mold 600.

Subsequently, as shown in Fig. 10(b), the foamable material 610, which is obtained by mechanically mixing a material to be foamed (such as the heat curable composition 410) with a gas so as to enable the gas to be dispersed in the material, is injected in a predetermined amount into the cavity 602 of the mold 600, which is based on an expansion ratio (in other words, in consideration of a volume after expansion) of the foamable material. In this instance also, the vacuum pump 512 is continuously operated to reduce the pressure in the cavity 602 of the mold 600. When the foamable material 610 is injected into the cavity 602 of the mold 600, since the cavity 602 is placed under reduced pressure, the foamable material 610 foams instantly upon injection, due to expansion of the pressurizing gas in the foamable material. The foamable material 610 continues to foam across the entire cavity 602 of the mold. Thereafter, as shown in Fig. 10(c), the actuator 514 is operated according to a command signal from the control device 510, to thereby move towards one another the female type mold half 604 and the male type mold half 606 (in the directions indicated by the arrows D in Fig. 10(c)). Thus, the foamable material that has been foamed is compressed or press-formed, to thereby obtain the shaped foam 614. Press-forming may be conducted after the injected foamable material is completely foamed, or during foaming of the foamable material. It is preferable for the mold to be compressed after the entire cavity 602 is filled with the foamable material 610 that has been foamed. Thereafter, the shaped foam is heat cured by heating the mold 600. Then, as shown in Fig. 10(d), the actuator 514 is operated, to thereby move apart from one another the female type mold half 604 and the male type mold half 606 (in the directions indicated by the double-headed arrow A in Fig. 10(d)). A pressing device 612 provided in the female type mold half 604 is moved in the direction indicated by the arrow B in Fig. 10(d), and the shaped foam after curing, that is, the article 614, is removed in the direction indicated by the arrow C in Fig. 10(d).

In this embodiment, the foamable material 610 is injected into the cavity 602 which is placed under reduced pressure. Therefore, the foaming gas in the foamable material is not compressed in the cavity 602, and the foamable material is molded with most of the foaming gas being expanded. Further, the injected foamable material flows to every part of the cavity, resulting in good moldability and uniform foaming properties (a cell condition). Further, the foamed material is press formed. Therefore, a uniform surface of the shaped foam 614 can be reliably obtained.

According to a further embodiment, there is provided a reduced-pressure injection expansion foam molding method for a hermetically closed mold, in which a foamable material is injected into the mold cavity placed under reduced pressure, and the mold cavity is expanded so as to foam and shape the foamable material in the expanded cavity.

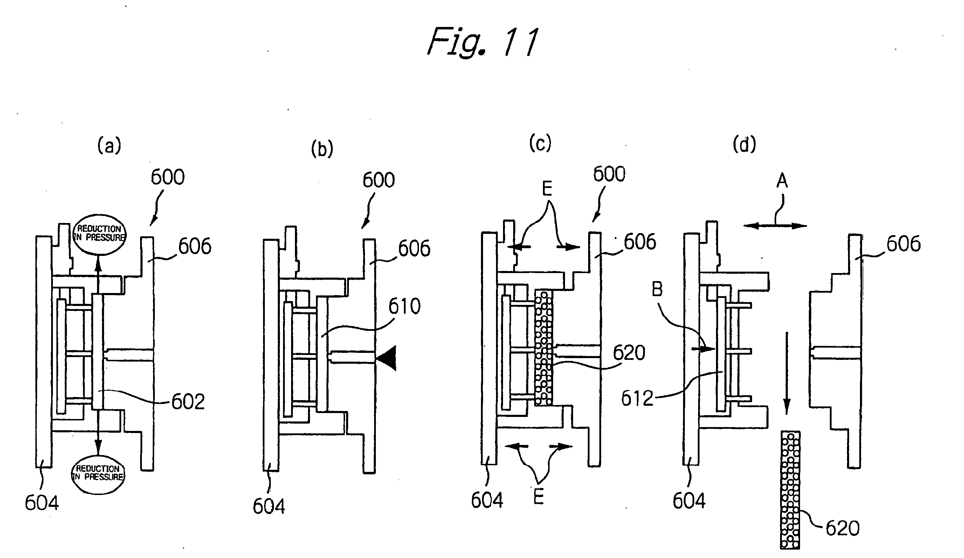

In this embodiment also, instead of the mold 300 shown in Fig. 7, a mold 600 shown in Fig. 11 is employed. The other arrangements are the same as those in the embodiment shown in Fig. 7. The mold 600 shown in Fig. 11 is the same as that shown in Figs. 9 and 10, and comprises the female type mold half 604 and the male type mold half 606.

In this method, the mold 600 comprising the female type mold half 604 and the male type mold half 606 is provided so as to place the cavity 602 in a hermetically closed state shown in Fig. 11(a), and the vacuum pump 512 is operated, to thereby reduce the pressure in the cavity 602 of the mold 600.

It should be noted that in a step carried out later, the female type mold half 604 and the male type mold half 606 are moved apart from one another, so as to enable foam molding to be conducted in an expanded cavity of the mold. Therefore, the female type mold half 604 and the male type mold half 606 are provided to be closer to one another as compared to the embodiment shown in Fig. 10(a). That is, the mold 600 is provided with the cavity 602 having a smaller volume as compared to the embodiment of Fig. 10(a).

Next, as indicated in Fig. 11(b), before injection of the Foamable material, operation of the vacuum pump 512 is stopped, to thereby stop reducing the pressure in the cavity 602 of the mold 600. Subsequently, the foamable material 610, which is obtained by mechanically mixing a material to be foamed (such as the heat curable composition 410) with a gas so as to enable the gas to be dispersed in the material, is injected in a predetermined amount into the cavity 602 of the mold 600, which is based on an expansion ratio (in other words, in consideration of a volume after expansion) of the foamable material. When the foamable material 610 is injected into the cavity 602 of the mold 600, since the cavity 602 is placed under reduced pressure, the foamable material 610 instantly foams upon injection, due to expansion of the pressurizing gas in the foamable material. The foamable material 610 continues to foam across the entire cavity 602 of the mold. In this step, the cavity 602 is not subject to a continuous reduction in pressure. Therefore, when the material foams to a certain degree, the pressure in the cavity 602 becomes high, thus suppressing foaming. Therefore, as indicated in Fig. 11(c), the actuator 514 is operated, based on a command signal from the control device 510, and the female type mold half 604 and the male type mold half 606 are moved apart from one another (in the directions indicated by the arrows E in Fig. 11(c)), to thereby expand the cavity 602. As a result, expansion of the pressurizing gas in the foamable material is enhanced, to thereby enable the foamable material to be continuously foamed. In this case, to continue the foaming of the foamable material, it is preferred that each of the mold halves be moved backward by a predetermined amount as soon as the foamable material is injected into the mold. Thus, each of the mold halves is moved backward by a predetermined amount as soon as the foamable material is injected into the mold, to thereby expand the pressurizing gas in the foamable material and thus obtain a shaped foam. Thereafter, the shaped foam is heat cured by heating the mold 600. Then, as shown in Fig. 10(d), the actuator 514 is operated, to thereby move apart from one another the female type mold half 604 and the male type mold half 606 (in the directions indicated by the double-headed arrow A in Fig. 10(d)). A pressing device 612 provided in the female type mold half 604 is moved in the direction indicated by the arrow B in Fig. 10(d), and the shaped foam after curing, that is, the article 614, is removed in the direction indicated by the arrow C in Fig. 10(d).

In this embodiment also, the foamable material 610 is injected into the cavity 602 which is placed under reduced pressure. Therefore, the foaming gas in the foamable material is not compressed in the cavity 602, and the foamable material is molded with most of the foaming gas being expanded. Further, the foamable material flows to every part of the cavity, and therefore satisfactory moldability and uniform foaming properties (a cell condition) can be obtained.

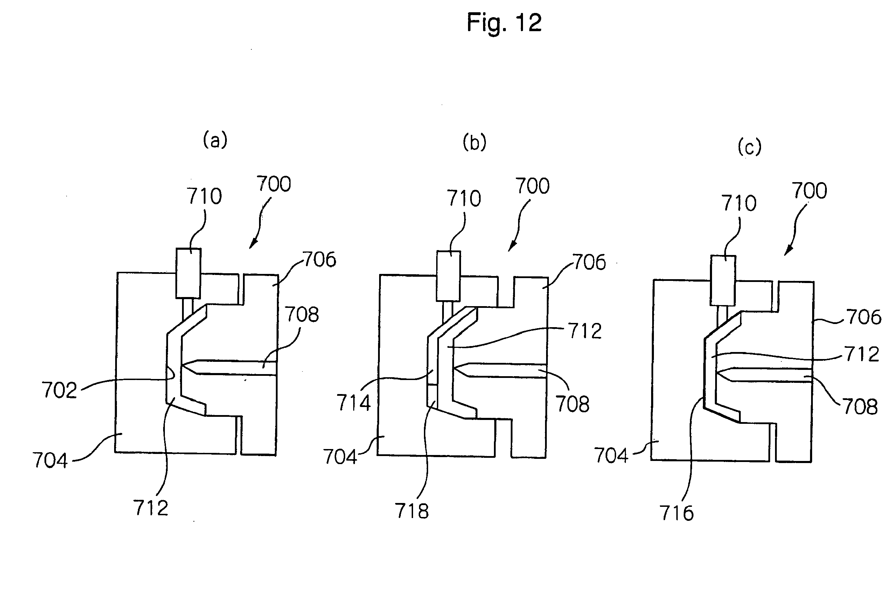

It is also possible to utilize in-mold insert foam molding by using the above-mentioned foam molding method. Hereinbelow, referring to Figs. 12(a), (b) and (c), description is made with regard to an embodiment of a method for forming a layer of a shaped foam which covers a surface of a molded product using a pressure press-forming method. The molded product is a core member comprising a non-foamable material, such as a non-foamable resin (a plastic).

In this embodiment, instead of the mold 300 shown in Fig. 7, a mold 700 shown in Fig. 12 is used. The other arrangements are substantially the same as those shown in Fig. 7.

The mold 700 shown in Fig. 12 comprises a female mold half 704 and a male mold half 706. The female mold half 704 and the male mold half 706 are disposed to be close to one another, to thereby form a cavity 702 which is hermetically closed.

In the male mold half 706, a first injection nozzle 708 is provided. A non-foamable resin is injected from the first injection nozzle 708 into the cavity 702, to thereby form a molded product 712 made of the non-foamable resin. Thus, a molded product made of a non-foamable resin is formed in the cavity 702 by injection molding.

In the female mold half 704, a second injection nozzle 710 for injection of a foamable material (for example, a foamable resin such as an elastomer, i.e., a heat curable resin, a thermoplastic resin, etc) is provided. A foamable material 714 is injected from the second injection nozzle 710 into the cavity 702, and the foamable material 714 foams in the cavity 702, to thereby form a shaped foam 716.

First, as shown in Fig. 12(a), a non-foamable resin is injected from the first injection nozzle 708 into the cavity 702, to thereby form the molded product 712 as a core member.

Subsequently, as shown in Fig. 12(b), the actuator 514 is operated, based on a command signal from the control device 510, to thereby slightly move apart from one another the female mold half 704 and the male mold half 706, thus slightly opening the mold and slightly expanding or spreading the cavity 702. Consequently, a clearance 718 corresponding to the slight opening of the mold is formed in the cavity 702.

Subsequently, as shown in Fig. 12(b), the foamable material (obtained by mechanically mixing a material 714 to be foamed with gas by means of a piston pump) is injected from the second injection nozzle 710 towards the clearance 718. The foamable material 714 foams so as to fill the entire clearance 718. As a result, a shaped foam is obtained, which adheres to a surface of the molded product 712 formed in the cavity 702, to thereby cover the surface of the molded product.

Subsequently, as shown in Fig. 12(c), the actuator 514 is operated in accordance with a command signal from the control device 510, to thereby move towards one another the female mold half 704 and the male mold half 706, and clamp the mold. Then, the shaped foam 716 is heat cured. Thus, the shaped foam 716 can be formed on a surface of the molded product 712 made of a resin, such as a thermoplastic material, as a core member (including a hollow member).

In this embodiment, the core member is formed from a non-foamable material. However, the core member may be formed from a foamable material, and a layer comprising a shaped foam may be formed on a surface of the core member formed from the foamable material.

In this embodiment, a shaped foam is formed on a surface of the core member. However, this does not limit the present invention. A reverse in-mold insert molding method may be employed, in which a foam is obtained as a core member and a solid layer (a coating) is formed so as to cover a surface of the core member.

In this method, a mold comprising a female mold half and a male mold half is provided, with a cavity being formed between the female mold half and the male mold half. Such a mold is the same as the mold 700 shown in Fig. 12. The other arrangements are substantially the same as those shown in Fig. 7.

Next, a foamable material (obtained by mechanically mixing a material to be foamed with a gas by means of a piston pump) is injected from the second injection nozzle 710 into the cavity 702, and the foamable material is foamed in the cavity 702, to thereby form a shaped foam, which is then heat cured.

Thereafter, the actuator 514 is operated in accordance with a command signal from the control device 510, to thereby slightly move apart from one another the female mold half 704 and the male mold half 706, thus slightly opening the mold and slightly expanding or spreading the cavity 702. Consequently, the clearance 718 corresponding to the slight opening of the mold is formed in the cavity 702.

Then, a non-foamable resin is injected from the first injection nozzle 708 towards the clearance 718 formed in the cavity 702, to thereby form a solid layer (a coating) made of the resin on a surface of the shaped foam as a core member.

In the above embodiment, a vacuum pump is used so as to control a pressure in the mold cavity. Instead of using the vacuum pump, a valve may be provided so as to permit or prevent communication between the mold cavity and the outside. In this case, opening/closing, or a degree of opening/closing of the valve is controlled by the control device 510.

In the above embodiments, a gas and a material to be foamed are mechanically mixed with each other by means of the piston pump 453. The type of piston pump is not limited. The piston pump 453 is a reciprocating type for a volume-based operation, in which a suction stroke and a discharge stroke are effected by reciprocal movements of the piston in the cylinder. Therefore, it is suitable for measuring and transferring the gas and the heat curable composition, and is capable of supplying a foamable material in a predetermined amount repeatedly and accurately. Further, a duplex type piston pump is shown in the embodiment. However, the number of piston pumps to be used can be appropriately determined in relation to an amount of discharge and continuous discharge characteristics.

Further, in the above embodiments, a heating medium is appropriately flowed through a passage formed in the mold, to thereby heat cure the shaped foam. However, other heating means, such as electric resistance heating, electromagnetic induction heating, ultrasonic induction heating, high-frequency dielectric heating, etc., may be employed.

In a case that shaped foams are formed continuously by injecting, into a mold, a heat curable composition as a material to be foamed, high productivity can be achieved by repeating the heating and the cooling of the mold. Especially, a heat curable polyurethane composition, which is most suitably used as a material to be foamed in the present invention, has critical heat curing properties, so that repetition of heating and cooling of the mold can be easily performed. To repeat the heating and the cooling of the mold, a plurality of molds may be used. In this case, a foamable material comprising a heat curable composition is injected successively or alternately to the plurality of molds, followed by foaming, curing and releasing.

On the other hand, when a thermoplastic resin is used as a material to be foamed, the thermoplastic resin is first hot melted. Then, the thermoplastic resin is mixed with a gas, injected and foamed, and cured by cooling. As a heat source for hot melting a thermoplastic resin, various heating means, such as electric resistance heating, electromagnetic induction heating, ultrasonic induction heating, high-frequency dielectric heating, etc., may be employed.

## Claims

1. A foam molding method for foaming a foamable material, comprising the steps of:
providing a mold (10) having a cavity (12), the mold (10) including a tube passage (14) for allowing communication between the cavity (12) of the mold (10) and external air, and a discharge valve (16) for opening and closing the tube passage (14);
mechanically mixing a material to be foamed with a gas, to thereby prepare a foamable material;
injecting the foamable material into the cavity (12);
placing the cavity (12) of the mold (10) under a pressurized condition; and
releasing the pressurized condition of the cavity (12) of the mold (10);
foaming the foamable material in the cavity (12) of the mold (10) under the pressurized condition, to thereby appropriately control foaming of the foamable material; and
controlling the pressurized condition of the cavity (12) by maintaining the pressure in the cavity (12) at a predetermined level while the foaming step is being conducted
**characterised by** opening the discharge valve (16) to thereby place the cavity (12) of the mold (10) under atmospheric pressure and then closing the discharge valve (16) before injection of the foamable material is started, such that the cavity (12) of the mold (10) is at atmospheric pressure when injection of the foamable material into the cavity (12) of the mold (10) is started.

2. A foam molding method according to claim 1, wherein said placing step comprises a step of hermetically closing the cavity (12) of the mold (10) by closing the discharge valve (16).

3. A foam molding method according to claim 2, wherein said placing step comprises a step of injecting the foamable material after said hermetically closing step.

4. A foam molding method according to claim 1, wherein said controlling step is commenced after the foamable material is started to be supplied to the cavity (12).

5. A foam molding method according to any one of claims 1 to 4, wherein said controlling step includes a step of discharging a gas in the cavity (12) of the mold (10) to the outside.

6. A foam molding method according to any one of claims 1 to 5, wherein in said controlling step, a pressure in the cavity (12) of the mold (10) is controlled to 0.1 Kg/cm² or more.

7. A foam molding method according to any one of claims 2 to 6, wherein said releasing step includes a step of opening the hermetically closed cavity (12) of the mold (10).

8. A foam molding apparatus comprising:
a mold (10) having a cavity (12), said mold (10) including a tube passage (14) for allowing communication between the cavity (12) of the mold (10) and external air, and a discharge valve (16) for opening and closing the tube passage (14) whereby the discharge valve (16) is openable to place the cavity (12) of the mold (10) under atmospheric pressure;
a mixing device (100) adapted to mechanically mix a material to be foamed with a gas, to thereby prepare a foamable material;
injection means (90) for injecting the foamable material into the cavity (12) of the mold (10);
pressurizing means (70) adapted to pressurize the cavity (12) of the mold (10); and
controlling means (50) adapted to control the pressure in the cavity (12) of the mold (10), so as to appropriately control foaming of the foamable material injected into the cavity (12) by the injection means (90);
**characterised in that** the controlling means (50) is adapted to control opening of the discharge valve (16) to place the cavity (12) of the mold (10) under atmospheric pressure and then to control closing of the discharge valve (16) before injection of the foamable material is started, and then to control the injection means (90) to inject the foamable material into the cavity (12) of the mold (10).

9. A foam molding apparatus according to claim 8, wherein said pressurizing means (70) includes means for supplying a predetermined gas to the cavity (12) of the mold (10).

10. A foam molding apparatus according to claim 8, wherein:
said controlling means (50) is for controlling said discharge valve (16) so as to enable the cavity (12) to be hermetically closed before injection of the foamable material.

11. A foam molding apparatus according to claim 8, wherein:
said controlling means (50) is for maintaining the pressure in the cavity (12) of the mold (10) at a predetermined level by appropriately opening or closing the discharge valve (16).

12. A foam molding apparatus according to claim 11, further comprising a pressure gauge (18) for measuring the pressure in the cavity (12) of the mold (10), wherein said controlling means (50) is for automatically opening or closing said discharge valve (16), based on results of measurement conducted by said pressure gauge (18), to thereby maintain the pressure in the cavity (12) of the mold (10) at the predetermined level.

13. A foam molding apparatus according to claim 11 or 12, further comprising a flowmeter (96) for measuring a flow rate of the foamable material flowing into the cavity (12) of the mold (10), wherein said controlling means (50) is for automatically opening or closing said discharge valve (16), based on results of measurement conducted by said flowmeter (96), to thereby maintain the pressure in the cavity (12) of the mold (10) at the predetermined level.

14. A foam molding apparatus according to claim 13, wherein said controlling means (50) is for automatically opening or closing said discharge valve (16) before or after starting injecting the foamable material into the cavity (12) of the mold (10), to thereby control the pressure in the cavity (12) of the mold (10).

15. A foam molding apparatus according to any one of claims 11 to 14, wherein said predetermined level is 0.1 Kg/cm² or more and equal to or lower than a pressure of injection of the foamable material.

16. A foam molding apparatus according to any one of claims 8 to 15, wherein said tube passage (14) is provided in a region in the cavity (12) of the mold (10) that is finally filled with the foamable material which has been foamed.

17. A foam molding apparatus according to claim 16, wherein:
the cavity (12) of the mold (10) has an elongated form extending in one direction; and
said injection means (90) is provided on one end of the mold (10) in a longitudinal direction thereof, said tube passage (14) being provided on an opposite end of the mold (10).

18. A foam molding apparatus according to any one of claims 8 to 17, wherein said injection means (90) includes an injection nozzle (92) for injection of the foamable material, said injection nozzle (92) being adapted to be moved relative to the mold (10).

## Patentansprüche

1. Formschäumverfahren zum Schäumen eines schäumbaren Materials, das die folgenden Schritte umfasst:
Bereitstellen einer Form (10) mit einem Hohlraum (12), wobei die Form (10) einen Röhrendurchlass (14) zum Ermöglichen einer Kommunikation zwischen dem Hohlraum (12) der Form (10) und Außenluft beinhaltet, und eines Auslassventils (16) zum Öffnen und Schließen des Röhrendurchlasses (14);
mechanisches Mischen eines zu schäumenden Materials mit einem Gas, um dadurch ein schäumbares Material vorzubereiten;
Einspeisen des schäumbaren Materials in den Hohlraum (12);
Bringen des Hohlraums (12) der Form (10) in einen druckbeaufschlagten Zustand; und
Lösen des druckbeaufschlagten Zustands des Hohlraums (12) der Form (10);
Schäumen des schäumbaren Materials in dem Hohlraum (12) der Form (10) in dem druckbeaufschlagten Zustand, um dadurch das Schäumen des schäumbaren Materials geeignet zu steuern; und
Steuern des druckbeaufschlagten Zustands des Hohlraums (12), indem der Druck in dem Hohlraum (12) auf einem vorgegebenen Pegel gehalten wird, während der Schäumschritt durchgeführt wird;
**gekennzeichnet durch** Öffnen des Auslassventils (16), um dadurch den Hohlraum (12) der Form (10) auf Atmosphärendruck zu bringen, und anschließendes Schließen des Auslassventils (16) bevor das Einspeisen des schäumbaren Materials begonnen wird, so dass der Hohlraum (12) der Form (10) unter Atmosphärendruck steht, wenn das Einspeisen des schäumbaren Materials in den Hohlraum (12) der Form (10) begonnen wird.

2. Formschäumverfahren nach Anspruch 1, bei dem der Bringschritt einen Schritt des hermetischen Schließens des Hohlraums (12) der Form (10) durch Schließen des Auslassventils (16) umfasst.

3. Formschäumverfahren nach Anspruch 2, bei dem der Bringschritt einen Schritt des Einspeisens des schäumbaren Materials nach dem Schritt des hermetischen Schließens umfasst.

4. Formschäumverfahren nach Anspruch 1, bei dem der Steuerschritt begonnen wird, nachdem damit begonnen wurde, dem Hohlraum (12) das schäumbare Material zuzuführen.

5. Formschäumverfahren nach einem der Ansprüche 1 bis 4, bei dem der Steuerschritt einen Schritt des Auslassens eines Gases in dem Hohlraum (12) der Form (10) zu der Außenseite beinhaltet.

6. Formschäumverfahren nach einem der Ansprüche 1 bis 5, bei dem in dem Steuerschritt ein Druck in dem Hohlraum (12) der Form (10) auf 0,1 Kg/cm² oder mehr eingestellt wird.

7. Formschäumverfahren nach einem der Ansprüche 2 bis 6, bei dem der Löseschritt einen Schritt des Öffnens des hermetisch geschlossenen Hohlraums (12) der Form (10) beinhaltet.

8. Formschäumvorrichtung, die umfasst:
eine Form (10) mit einem Hohlraum (12), wobei die Form (10) einen Röhrendurchlass (14) zum Ermöglichen einer Kommunikation zwischen dem Hohlraum (12) der Form (10) und Außenluft beinhaltet, und ein Auslassventil (16) zum Öffnen und Schließen des Röhrendurchlasses (14), wodurch das Auslassventil (16) geöffnet werden kann, um den Hohlraum (12) der Form (10) auf Atmosphärendruck zu bringen;
eine Mischeinrichtung (100), die dafür ausgelegt ist, ein zu schäumendes Material mechanisch mit einem Gas zu mischen, um dadurch ein schäumbares Material vorzubereiten;
ein Einspeismittel (90) zum Einspeisen des schäumbaren Materials in den Hohlraum (12) der Form (10);
ein Druckbeaufschlagungsmittel (70), das dafür ausgelegt ist, den Hohlraum (12) der Form (10) mit Druck zu beaufschlagen; und
ein Steuermittel (50), das dafür ausgelegt ist, den Druck in dem Hohlraum (12) der Form (10) zu steuern, um so das Schäumen des durch das Einspeismittel (90) in den Hohlraum (12) eingespeisten schäumbaren Materials geeignet zu steuern;
**dadurch gekennzeichnet, dass** das Steuermittel (50) dafür ausgelegt ist, ein Öffnen des Auslassventils (16) zu steuern, um den Hohlraum (12) der Form (10) auf Atmosphärendruck zu bringen, und anschließend ein Schließen des Auslassventils (16) zu steuern bevor das Einspeisen des schäumbaren Materials begonnen wird, und anschließend das Einspeismittel (90) zu steuern, um das schäumbare Material in den Hohlraum (12) der Form (10) einzuspeisen.

9. Formschäumvorrichtung nach Anspruch 8, bei der das Druckbeaufschlagungsmittel (70) ein Mittel zum Zuführen eines vorgegebenen Gases zu dem Hohlraum (12) der Form (10) beinhaltet.

10. Formschäumvorrichtung nach Anspruch 8, bei der:
das Steuermittel (50) zum Steuern des Auslassventils (16), um so zu ermöglichen, dass der Hohlraum (12) vor dem Einspeisen des schäumbaren Materials hermetisch geschlossen wird, dient.

11. Formschäumvorrichtung nach Anspruch 8, bei der:
das Steuermittel (50) zum Halten des Drucks in dem Hohlraum (12) der Form (10) auf einem vorgegebenen Pegel durch geeignetes Öffnen oder Schließen des Auslassventils (16) dient.

12. Formschäumvorrichtung nach Anspruch 11, die ferner einen Druckmesser (18) zum Messen des Drucks in dem Hohlraum (12) der Form (10) umfasst, wobei das Steuermittel (50) zum automatischen Öffnen oder Schließen des Auslassventils (16) auf Grundlage von Ergebnissen einer durch den Druckmesser (18) durchgeführten Messung dient, um dadurch den Druck in dem Hohlraum (12) der Form (10) auf dem vorgegebenen Pegel zu halten.

13. Formschäumvorrichtung nach Anspruch 11 oder 12, die ferner einen Flussmesser (96) zum Messen einer Flussrate des in den Hohlraum (12) der Form (10) fließenden schäumbaren Materials umfasst, wobei das Steuermittel (50) zum automatischen Öffnen oder Schließen des Auslassventils (16) auf Grundlage von Ergebnissen einer durch den Flussmesser (96) durchgeführten Messung dient, um dadurch den Druck in dem Hohlraum (12) der Form (10) auf dem vorgegebenen Pegel zu halten.

14. Formschäumvorrichtung nach Anspruch 13, bei der das Steuermittel (50) zum automatischen Öffnen oder Schließen des Auslassventils (16) vor oder nach dem Beginnen des Einspeisens des schäumbaren Materials in den Hohlraum (12) der Form (10) dient, um dadurch den Druck in dem Hohlraum (12) der Form (10) zu steuern.

15. Formschäumvorrichtung nach einem der Ansprüche 11 bis 14, bei welcher der vorgegebene Pegel 0,1 Kg/cm² oder mehr beträgt und gleich groß wie oder kleiner als ein Druck des Einspeisens des schäumbaren Materials ist.

16. Formschäumvorrichtung nach einem der Ansprüche 8 bis 15, bei welcher der Röhrendurchlass (14) in einem Bereich in dem Hohlraum (12) der Form (10) vorgesehen ist, der letztlich mit dem schäumbaren Material, das geschäumt wurde, gefüllt wird.

17. Formschäumvorrichtung nach Anspruch 16, bei welcher:
der Hohlraum (12) der Form (10) eine längliche Form aufweist, die sich in einer Richtung erstreckt; und
das Einspeismittel (90) an einem Ende der Form (10) in einer Längsrichtung derselben vorgesehen ist, wobei der Röhrendurchlass (14) an einem entgegengesetzten Ende der Form (10) vorgesehen ist.

18. Formschäumvorrichtung nach einem der Ansprüche 8 bis 17, bei der das Einspeismittel (90) eine Einspeisdüse (92) zum Einspeisen des schäumbaren Materials beinhaltet, wobei die Einspeisdüse (92) dafür ausgelegt ist, relativ zu der Form (10) bewegt zu werden.

## Revendications

1. Procédé de moulage de mousse pour l'expansion d'un matériau expansible, comprenant les étampes :
de fourniture d'un moule (10) comportant une cavité (12), le moule (10) comprenant un passage tubulaire (14) pour permettre une communication entre la cavité (12) du moule (10) et l'air externe, et une vanne de décharge (16) pour ouvrir et fermer le passage tubulaire (14) ;
de mélange mécanique d'un matériau destiné à une expansion avec un gaz, pour préparer de ce fait un matériau expansible ;
d'injection du matériau expansible dans la cavité (12) ;
de placement de la cavité (12) du moule (10) dans une condition sous pression ; et
de libération de la condition sous pression de la cavité (12) du moule (10) ;
d'expansion du matériau expansible dans la cavité (12) du moule (10) dans la condition sous pression, pour commander de ce fait de manière appropriée l'expansion du matériau expansible ; et
de commande de la condition sous pression de la cavité (12) en maintenant la pression dans la cavité (12) à un niveau prédéterminé alors que l'étape d'expansion est effectuée ;
**caractérisé par** l'ouverture de la vanne de décharge (16) pour placer de ce fait la cavité (12) du moule (10) sous une pression atmosphérique et par la fermeture ensuite de la vanne de décharge (16) avant que l'injection du matériau expansible soit débutée, de sorte que la cavité (12) du moule (10) soit à la pression atmosphérique lorsque l'injection du matériau expansible dans la cavité (12) du moule (10) est débutée.

2. Procédé de moulage de mousse selon la revendication 1, dans lequel ladite étape de placement comprend une étape de fermeture hermétique de la cavité (12) du moule (10) en fermant la vanne de décharge (16).

3. Procédé de moulage de mousse selon la revendication 2, dans lequel ladite étape de placement comprend une étape d'injection du matériau expansible après ladite étape de fermeture hermétique.

4. Procédé de moulage de mousse selon la revendication 1, dans lequel ladite étape de commande est débutée après le commencement de la fourniture du matériau expansible dans la cavité (12).

5. Procédé de moulage de mousse selon l'une quelconque des revendications 1 à 4, dans lequel ladite étape de commande comprend une étape de décharge d'un gaz présent dans la cavité (12) du moule (10) à l'extérieur.

6. Procédé de moulage de mousse selon l'une quelconque des revendications 1 à 5, dans lequel, à ladite étape de commande, une pression dans la cavité (12) du moule (10) est commandée à 0,1 kg/cm² ou plus.

7. Procédé de moulage de mousse selon l'une quelconque des revendications 2 à 6, dans lequel ladite étape de libération comprend une étape d'ouverture de la cavité (12) fermée hermétiquement du moule (10).

8. Appareil de moulage de mousse comprenant :
un moule (10) comportant une cavité (12), ledit moule (10) comprenant un passage tubulaire (14) pour permettre une communication entre la cavité (12) du moule (10) et l'air externe, et une vanne de décharge (16) pour ouvrir et fermer le passage tubulaire (14), moyennant quoi la vanne de décharge (16) peut être ouverte pour placer la cavité (12) du moule (10) sous une pression atmosphérique ;
un dispositif de mélange (100) conçu pour mélanger mécaniquement un matériau destiné à une expansion avec un gaz, pour préparer de ce fait un matériau expansible ;
des moyens d'injection (90) pour injecter le matériau expansible dans la cavité (12) du moule (10) ;
des moyens de mise sous pression (70) conçus pour mettre sous pression la cavité (12) du moule (10) ; et
des moyens de commande (50) conçus pour commander la pression dans la cavité (12) du moule (10), de manière à commander de manière appropriée l'expansion du matériau expansible injecté dans la cavité (12) par les moyens d'injection (90) ;
**caractérisé en ce que** les moyens de commande (50) sont conçus pour commander l'ouverture de la vanne de décharge (16) pour placer la cavité (12) du moule (10) sous une pression atmosphérique et pour commander ensuite la fermeture de la vanne de décharge (16) avant que l'injection du matériau expansible soit débutée et pour commander ensuite les moyens d'injection (90) pour injecter le matériau expansible dans la cavité (12) du moule (10).

9. Appareil de moulage de mousse selon la revendication 8, dans lequel lesdits moyens de mise sous pression (70) comprennent des moyens pour fournir un gaz prédéterminé dans la cavité (12) du moule (10).

10. Appareil de moulage de mousse selon la revendication 8, dans lequel :
lesdits moyens de commande (50) servent à commander ladite vanne de décharge (16) de manière à permettre la fermeture hermétique de la cavité (12) avant l'injection du matériau expansible.

11. Appareil de moulage de mousse selon la revendication 8, dans lequel :
lesdits moyens de commande (50) servent à maintenir la pression dans la cavité (12) du moule (10) à un niveau prédéterminé en ouvrant ou en fermant de manière appropriée la vanne de décharge (16).

12. Appareil de moulage de mousse selon la revendication 11, comprenant en outre une jauge de pression (18) pour mesurer la pression dans la cavité (12) du moule (10), dans lequel lesdits moyens de commande (50) servent à ouvrir ou fermer automatiquement ladite vanne de décharge (16), sur la base des résultats d'une mesure effectuée par ladite jauge de pression (18), pour maintenir de ce fait la pression dans la cavité (12) du moule (10) au niveau prédéterminé.

13. Appareil de moulage de mousse selon la revendication 11 ou 12, comprenant en outre un débitmètre (96) pour mesurer un débit du matériau expansible s'écoulant dans la cavité (12) du moule (10), dans lequel lesdits moyens de commande (50) servent à ouvrir ou fermer automatiquement ladite vanne de décharge (16), sur la base des résultats de la mesure effectuée par ledit débitmètre (96), pour maintenir de ce fait la pression dans la cavité (12) du moule (10) au niveau prédéterminé.

14. Appareil de moulage de mousse selon la revendication 13, dans lequel lesdits moyens de commande (50) servent à ouvrir ou fermer automatiquement ladite vanne de décharge (16) avant ou après le début de l'injection du matériau expansible dans la cavité (12) du moule (10), pour commander de ce fait la pression dans la cavité (12) du moule (10).

15. Appareil de moulage de mousse selon l'une quelconque des revendications 11 à 14, dans lequel ledit niveau prédéterminé est de 0,1 kg/cm² ou plus et inférieur ou égal à une pression d'injection du matériau expansible.

16. Appareil de moulage de mousse selon l'une quelconque des revendications 8 à 15, dans lequel ledit passage tubulaire (14) est prévu dans une région dans la cavité (12) du moule (10) qui est finalement remplie du matériau expansible qui a fait l'objet d'une expansion.

17. Appareil de moulage de mousse selon la revendication 16, dans lequel :
la cavité (12) du moule (10) a une forme allongée s'étendant dans une direction ; et
lesdits moyens d'injection (90) sont prévus sur une extrémité du moule (10) dans une direction longitudinale de celui-ci, ledit passage tubulaire (14) étant prévu sur une extrémité opposée du moule (10).

18. Appareil de moulage de mousse selon l'une quelconque des revendications 8 à 17, dans lequel lesdits moyens d'injection (90) comprennent une buse d'injection (92) pour l'injection du matériau expansible, ladite buse d'injection (92) étant conçue pour être déplacée par rapport au moule (10).
